# EUROPÄISCHE PATENTSCHRIFT

(11) **EP 0 862 690 B1**
(45) Veröffentlichungstag und Bekanntmachung des Hinweises auf die Patenterteilung: **11.12.2002**
(21) Anmeldenummer: 97942787.9
(22) Anmeldetag: 05.09.1997
(51) Int. Cl.: F02M 61/18

(54) **LOCHSCHEIBE UND VENTIL MIT EINER LOCHSCHEIBE**
PERFORATED DISC AND VALVE COMPRISING THE SAME
DISQUE PERFORE ET SOUPAPE MUNIE D'UN DISQUE PERFORE

(30) Priorität: 26.09.1996 DE 19639506
(43) Veröffentlichungstag der Anmeldung: 09.09.1998
(73) Patentinhaber: ROBERT BOSCH GMBH, 70442 Stuttgart (DE)
(72) Erfinder: HOLZGREFE, Volker, D-71254 Ditzingen (DE); ARNDT, Stefan, D-70569 Stuttgart (DE); SIMON, Nikolaus, D-82418 Murnau (DE); SCHATZ, Frank, D-70806 Kornwestheim (DE); FUCHS, Heinz, D-70469 Stuttgart (DE); DANTES, Günter, D-71735 Eberdingen (DE); NOWAK, Detlef, D-70435 Stuttgart (DE); HEYSE, Jörg, D-71706 Markgröningen (DE); ADER, Beate, D-70499 Stuttgart (DE)
(86) Internationale Anmeldenummer: DE9701952
(87) Internationale Veröffentlichungsnummer: WO98013601

(56) Entgegenhaltungen:
- EP-A- 0 787 256
- WO-A-96/22460
- DE-A- 4 435 163
- DE-A- 4 437 913
- DE-A- 19 607 288
- US-A- 5 383 597

## Beschreibung

### Stand der Technik

Die Erfindung geht aus von einer Lochscheibe nach der Gattung des Anspruchs 1 sowie von einem Ventil mit einer Lochscheibe nach der Gattung des Anspruchs 24.

Es ist bereits aus der US-PS 4,828,184 bekannt, Düsen in Lochscheibenform zu fertigen, die sogenannte "S-Typ-Scheiben" darstellen. Damit ist gemeint, daß die Ein- und die Auslaßöffnungen in der Lochscheibe zueinander versetzt ausgebildet sind, wodurch sich zwangsläufig ein "S-Schlag" in der Strömung eines die Lochscheibe durchströmenden Fluids ergibt. Die vorgeschlagenen Lochscheiben werden von zwei ebenen, durch Bonden zusammengefügten Plättchen gebildet, die aus Silizium bestehen, wobei in dem oberen ersten Siliziumplättchen mehrere Einlaßöffnungen und in dem unteren zweiten, mit dem ersten Siliziumplättchen fest verbundenen Siliziumplättchen genau eine Auslaßöffnung vorgesehen sind. An den Siliziumplättchen sind Bereiche reduzierter Dicke ausgeformt, so daß Scherspalte parallel zu den Stirnflächen der Plättchen zwischen den Öffnungen des ersten Plättchens und der einen Öffnung des zweiten Plättchens gebildet sind. Mit der bekannten Maskentechnik werden durch Ätzen auf Siliziumwafern, die eine Vielzahl von Lochscheibenstrukturen aufweisen, die Ein- und Auslaßöffnungen erzeugt. Die pyramidenstumpfförmigen Konturen für die Öffnungen in der Lochscheibe ergeben sich in logischer Weise aus der anisotropen Ätztechnik.

Aus der US-PS 5,383,597 ist ebenso eine Lochscheibe in der Bauart einer S-Typ-Scheibe bekannt, die in bevorzugter Weise aus Silizium hergestellt ist. Unabhängig vom verwendeten Material und der Herstellungsweise der Lochscheibe besteht die Lochscheibe aus zwei miteinander fest verbundenen Plättchen, die unmittelbar aneinanderliegen und hintereinander durchströmt werden. In dem oberen ersten Plättchen sind mehrere Einlaßöffnungen vorgesehen, die an der stromabwärtigen Stirnseite des ersten Plättchens in ausgenommene Kanalbereiche münden. Das untere zweite Plättchen weist mehrere Auslaßöffnungen auf, die sich von an der stromaufwärtigen Stirnseite des zweiten Plättchens ausgebildeten, Vertiefungen darstellenden Kanalbereichen aus erstrecken. Im zusammengebauten Zustand der Lochscheibe liegen die beiden Plättchen derart aufeinander auf, daß die Kanalbereiche beider Plättchen zusammen jeweils Kanäle bzw. Kavitäten (cavities) bilden, die zwischen den Ein- und Auslaßöffnungen durchströmt werden. Durch das Ätzen als Bearbeitungsverfahren für die Siliziumplättchen liegen die Ein- und Auslaßöffnungen stets in Pyramidenstumpfform vor. Die Kanäle besitzen ebenso Wandneigungen, die durch die Kristallgitter des Siliziums für das Ätzen vorgegeben sind.

Eine weitere Lochscheibe, die besonders für Brennstoffeinspritzventile geeignet ist, mit zwei eng aneinanderliegenden, fest miteinander verbundenen Plättchen ist auch aus der US-PS 5,449,114 bekannt. Die Lochscheiben aus Silizium oder aus mehreren Metallen sind dabei so ausgeführt, daß sich in dem oberen ersten Plättchen eine einzige Einlaßöffnung erstreckt, die in einen als Kanal dienenden Graben an der stromabwärtigen Stirnseite des oberen ersten Plättchens mündet. In dem unteren zweiten Plättchen sind vier Auslaßöffnungen mit Versatz zur oberen Einlaßöffnung eingebracht. Die Versätze der unteren Auslaßöffnungen zur Einlaßöffnung sorgen dafür, daß ein "S-Schlag" in der Strömung eines durchströmenden Fluids, insbesondere eines Brennstoffs, entsteht.

Alle vorgenannten Lochscheiben aus Silizium besitzen den Nachteil einer eventuell nicht ausreichenden Bruchfestigkeit, die sich durch die Sprödigkeit von Silizium ergibt. Gerade bei Dauerbelastungen z. B. an einem Einspritzventil (Motorschwingungen) besteht die Gefahr, daß die Siliziumplättchen brechen. Die Montage der Siliziumplättchen an metallischen Bauteilen, wie beispielsweise an Einspritzventilen, ist aufwendig, da besondere spannungsfreie Klemmlösungen gefunden werden müssen und die Abdichtung am Ventil problematisch ist. Ein Anschweißen der Lochscheiben aus Silizium am Einspritzventil ist z. B. nicht möglich. Außerdem besteht der Nachteil einer Kantenabnutzung an den Öffnungen der Siliziumscheiben beim oftmaligen Durchströmen mit einem Fluid.

Des weiteren ist bereits aus der DE-PS 483 615 eine Düse für Einspritzbrennkraftmaschinen bekannt, die ebenfalls aus zwei Düsenplättchen gebildet ist, wobei die Düsenplättchen zueinander versetzt angeordnete Ein- und Auslaßöffnungen aufweisen, um ein Zerreißen des durchfließenden Brennstoffs zu begünstigen. Die beiden metallenen Düsenplättchen sind mittels konventioneller Technik (Prägen, Pressen, Walzen, Schneiden, Bohren, Fräsen, Schleifen usw.) hergestellt bzw. bearbeitet.

Allen bisher bekannten Lochscheiben ist dabei gemeinsam, daß die mehreren separat voneinander hergestellten und bearbeiteten Düsenplättchen mittels Fügeverfahren verbunden werden müssen. Dies erfolgt beispielsweise bei Siliziumplättchen durch Bonden und bei metallisch ausgebildeten Plättchen durch Schweißen oder Löten. Zusätzlich zu den eigentlichen Verbindungsverfahren sind außerdem weitere Arbeitsgänge, wie z. B. das Zentrieren der einzelnen Düsenplättchen zueinander, erforderlich. In nachteiliger Weise können diese zeit- und kostenintensiven Verfahrensschritte auch zu Verformungen der Düsenplättchen führen.

### Vorteile der Erfindung

Die erfindungsgemäße Lochscheibe mit den kennzeichnenden Merkmalen des Anspruchs 1 hat den Vorteil, daß sie auf einfache Art und Weise kompakt hergestellt ist und durch sie eine gleichmäßige Feinstzerstäubung eines Fluids ohne Zusatzenergie, also nur über den verfügbaren Mediumdruck, erreicht wird, wobei eine besonders hohe Zerstäubungsgüte und eine an die jeweiligen Erfordernisse angepaßte Strahlformung erzielt wird. Als Konsequenz können bei Verwendung einer solchen Lochscheibe an einem Ventil, insbesondere einem Brennstoffeinspritzventil einer Brennkraftmaschine, gemäß Anspruch 24 unter anderem die Abgasemission der Brennkraftmaschine reduziert und ebenso eine Verringerung des Brennstoffverbrauchs erzielt werden.

Von besonderem Vorteil ist es, die Lochscheibe hydraulisch entdrosselt auszubilden. Um dies zu erreichen, müssen die Querschnittsflächen des Strömungswegs durch die Lochscheibe bestimmte Größen aufweisen bzw. spezielle Verhältnisse zueinander besitzen. Um einen Druckverlust (Impulsverlust) im Eintritt der Lochscheibe zu vermeiden und eine hohe Zerstäubungsenergie in der Strömung zu behalten, weist eine Eintrittsquerschnittsfläche im inneren Kanal der Lochscheibe in vorteilhafter Weise einen größeren Wert auf als eine Austrittsquerschnittsfläche. Während sich die Eintrittsquerschnittsfläche als Produkt der Summe der Umfänge aller Einlaßöffnungen und der Höhe des Kanals senkrecht zum Querschnitt aller Einlaßöffnungen ergibt, bekommt man den Wert der Austrittsquerschnittsfläche durch Multiplikation der Summe der Umfänge aller Auslaßöffnungen mit der Höhe des Kanals. Der auf diese Art und Weise ausgebildete Strömungsdurchgang in der Lochscheibe garantiert einen hohen Strömungsdruck bzw. Strömungsimpuls, so daß eine besonders gute Zerstäubung des Fluids möglich ist. Außerdem ist es wiederum von Vorteil, wenn die Summe der Querschnittsflächen aller Einlaßöffnungen größer als die oben beschriebene Eintrittsquerschnittsfläche ist. Für eine von den Abmessungen her sehr kleine und trotzdem entdrosselte Lochscheibe soll also zur Erzielung eines Zerstäubungsoptimums Querschnittsfläche der Einlaßöffnung > Eintrittsquerschnittsfläche > Austrittsquerschnittsfläche gelten.

Außerdem besteht ein großer Vorteil darin, daß die mittels galvanischer Metallabscheidung hergestellten Lochscheiben einteilig ausgeführt sind, da die einzelnen Funktionsebenen in unmittelbar aufeinanderfolgenden Abscheideverfahrensschritten aufeinander aufgebaut werden. Nach Beendigung des Metallabscheidens liegt die Lochscheibe einteilig vor; es sind also keine zeit- und kostenintensiven Verfahrensschritte zum Verbinden einzelner Düsenplättchen nötig. Des weiteren entfallen die Probleme, die sich bei mehrteiligen Lochscheiben durch die Zentrierung bzw. die Positionierung einzelner Plättchen zueinander ergeben.

Durch die in den Unteransprüchen aufgeführten Maßnahmen sind vorteilhafte Weiterbildungen und Verbesserungen der im Anspruch 1 angegebenen Lochscheibe möglich.

Mittels galvanischer Metallabscheidung lassen sich in vorteilhafter Weise Lochscheiben in reproduzierbarer Weise äußerst präzise und kostengünstig in sehr großen Stückzahlen gleichzeitig herstellen. Außerdem erlaubt diese Herstellungsweise eine extrem große Gestaltungsfreiheit, da die Konturen der Öffnungen in der Lochscheibe frei wählbar sind. Besonders im Vergleich zu Siliziumlochscheiben, bei denen aufgrund der Kristallachsen erreichbare Konturen streng vorgegeben sind (Pyramidenstümpfe), ist eine flexible Formgebung sehr vorteilhaft. Das metallische Abscheiden hat besonders im Vergleich zur Herstellung von Siliziumscheiben den Vorteil einer sehr großen Materialvielfalt. Die verschiedensten Metalle mit ihren unterschiedlichen magnetischen Eigenschaften und Härten können bei der Herstellung der erfindungsgemäßen Lochscheibe zum Einsatz kommen.

Besonders vorteilhaft ist es, die erfindungsgemäßen Lochscheiben in der Form von S-Typ-Scheiben auszubilden, um exotische, bizarre Strahlformen erzeugen zu können. Optimal ist dabei für eine S-Typ-Scheibe, wenn ein Versatz zwischen den Einlaßöffnungen und den Auslaßöffnungen vorliegt. Als Versatz soll dabei der Abstand zwischen den Einlaßöffnungskanten der Einlaßöffnungen und der Auslaßöffnungskanten der zugeordneten Auslaßöffnungen verstanden werden, so daß keine Überlappung von Einlaßöffnungen und Auslaßöffnungen vorhanden ist. In wenigen Fällen kann es auch vorteilhaft sein, keinen Versatz im oben beschriebenen Sinn bzw. eine sehr geringe Überlappung vorzusehen, die dann so klein gewählt ist, daß die Strömung immer noch einen S-Schlag erfährt. Alle diese S-Typ-Lochscheiben ermöglichen für Ein-, Zwei- und Mehrstrahlsprays Strahlquerschnitte in unzähligen Varianten, wie z. B. Rechtecke, Dreiecke, Kreuze, Ellipsen. Solche ungewöhnlichen Strahlformen erlauben eine genaue optimale Anpassung an vorgegebene Geometrien, z. B. an verschiedene Saugrohrquerschnitte von Brennkraftmaschinen. Daraus ergeben sich die Vorteile einer formangepaßten Ausnutzung des verfügbaren Querschnitts zur homogen verteilten, abgasmindernden Gemischeinbringung und einer Vermeidung von abgasschädlichen Wandfilmanlagerungen an der Saugrohrwandung. Ganz allgemein ist als sehr bedeutender Vorteil der erfindungsgemäßen Lochscheiben festzuhalten, daß in einfacher Art und Weise Strahlbildvariationen möglich sind. So sind besonders einfach flache, keglige, mehrere Einzelstrahlen umfassende und asymmetrische (einseitig gerichtete) Strahlbilder erzeugbar.

Um eine hohe Zerstäubungsenergie in der Strömung zu behalten, sind die Einlaßöffnungen mäandiert, fledennausförmig, kreuzförmig, zahnradähnlich, knochenförmig, sichelförmig, T-förmig, kreisringabschnittförmig oder anderweitig mit großen Umfängen ausgestaltet. Große Umfänge der Einlaßöffnungen bedeuten relativ große Eintrittsquerschnittsflächen, die besonders erwünscht sind. In vorteilhafter Weise ist die Querschnittsfläche der Einlaßöffnungen größer oder gleich der Querschnittsfläche der Auslaßöffnungen.

Mit der Multilayergalvanik sind in besonders vorteilhafter Weise kostengünstig und mit extrem großer Präzision in der Lochscheibe Hinterschneidungen erzielbar.

Weitere Vorteile sind bei der Beschreibung der Ausführungsbeispiele erwähnt.

### Zeichnung

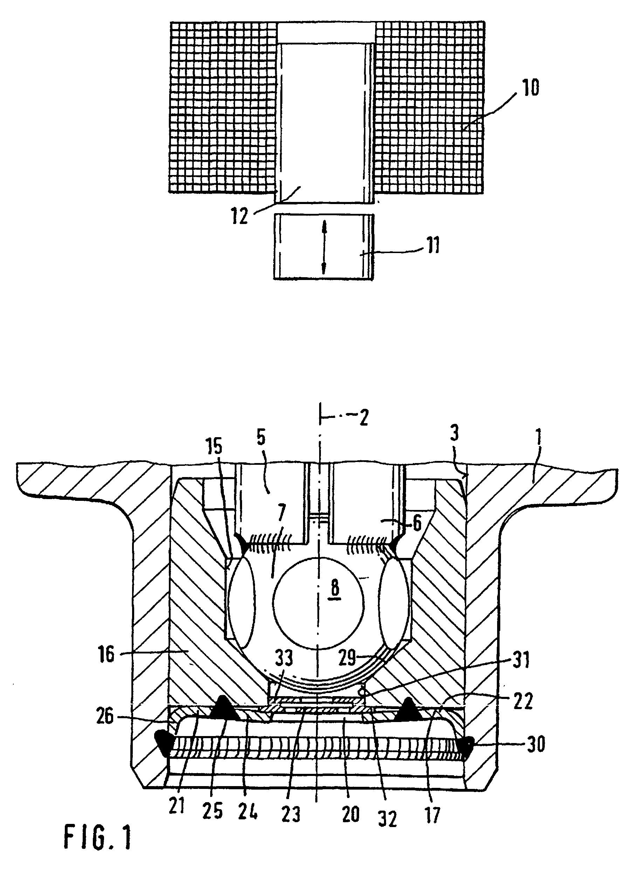

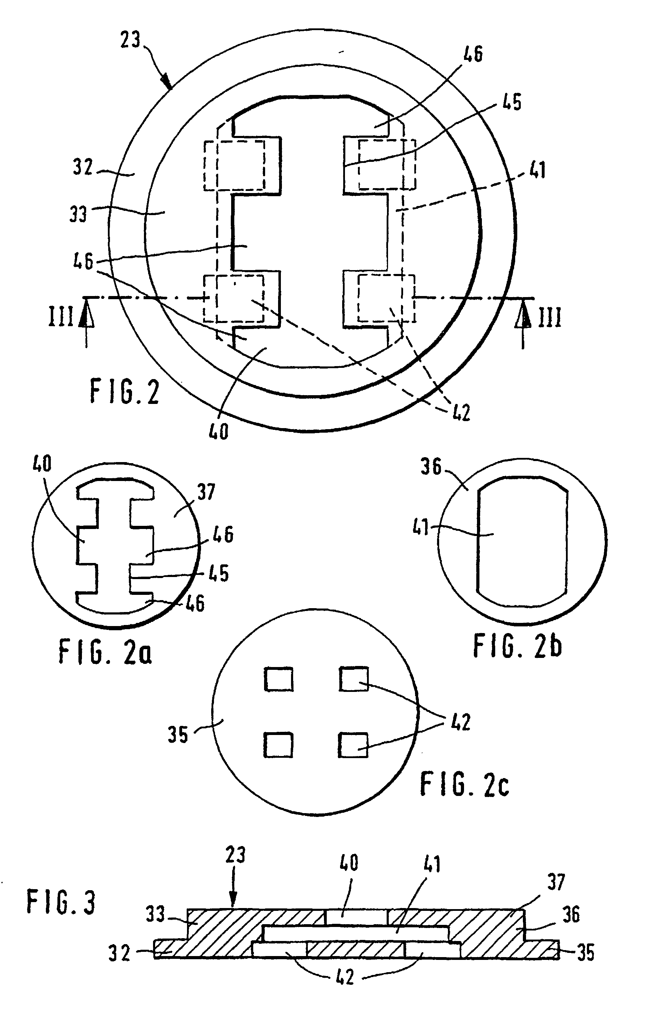

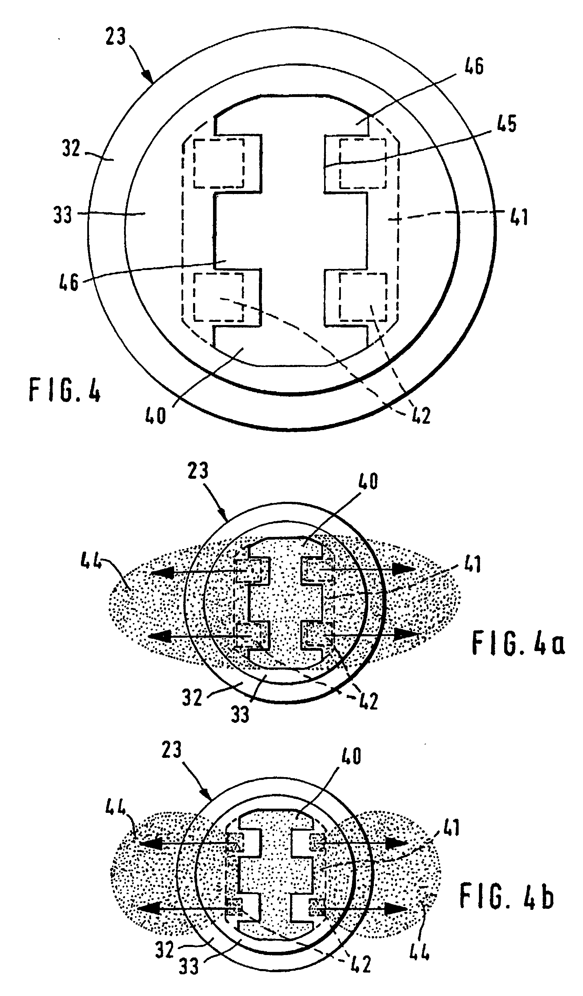

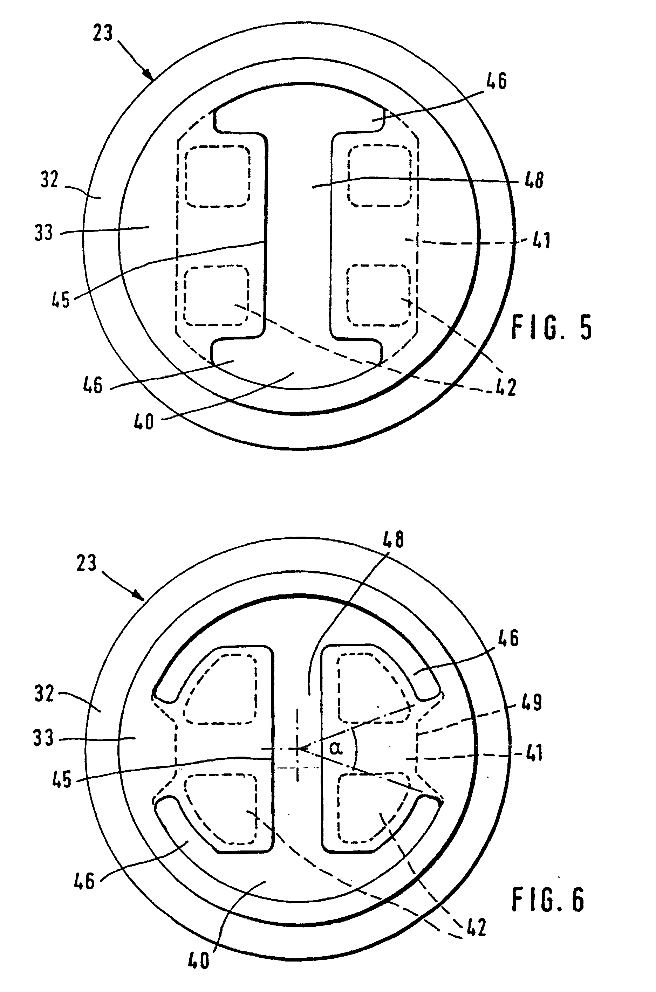

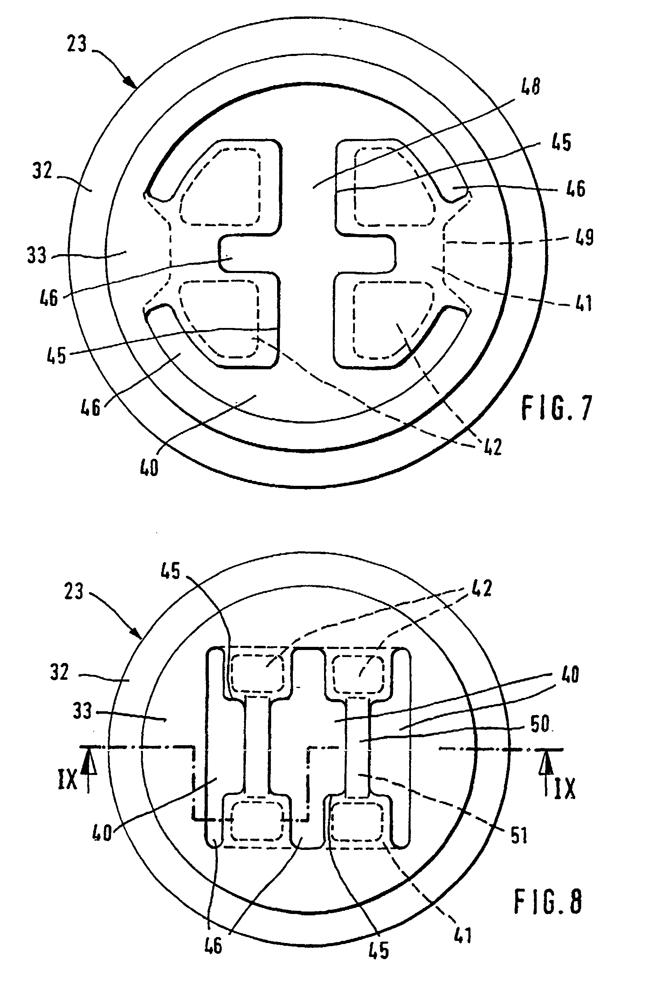

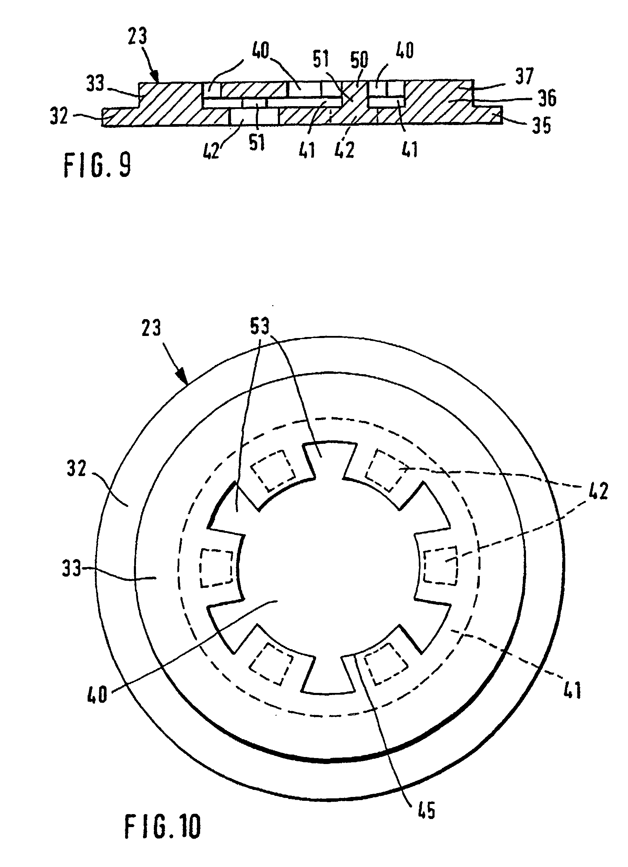

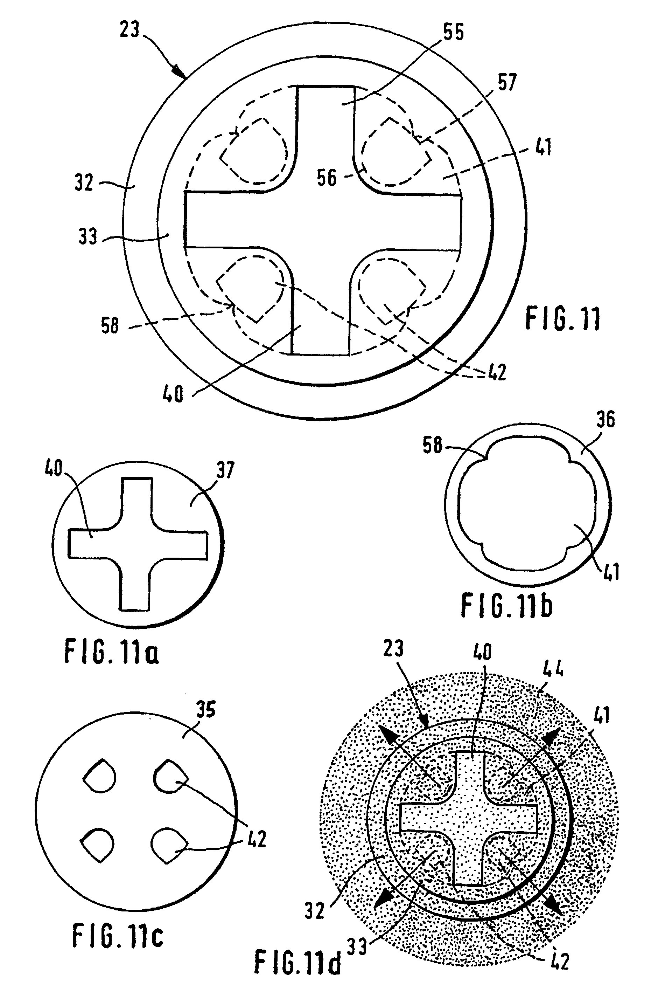

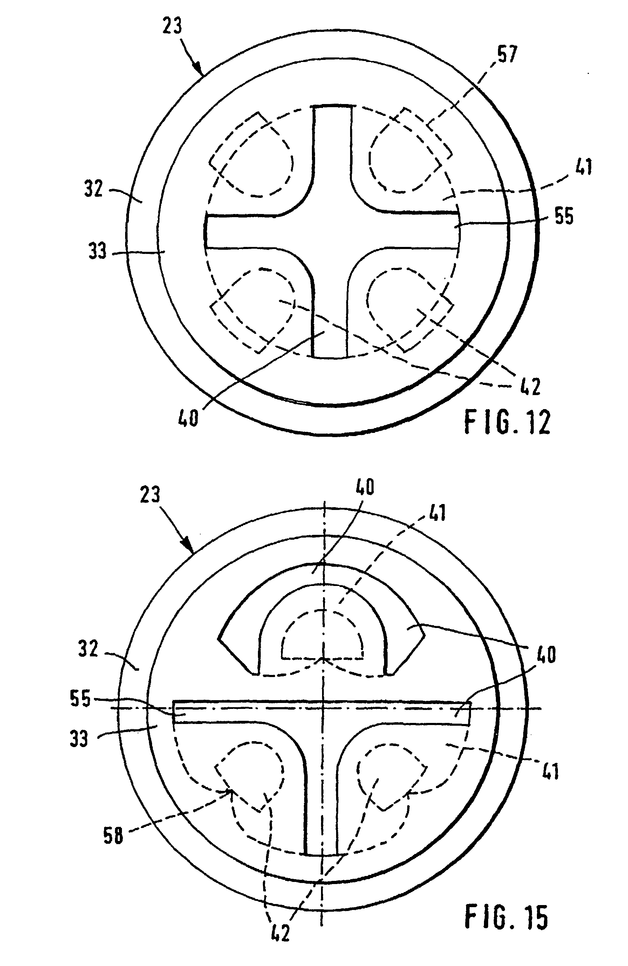

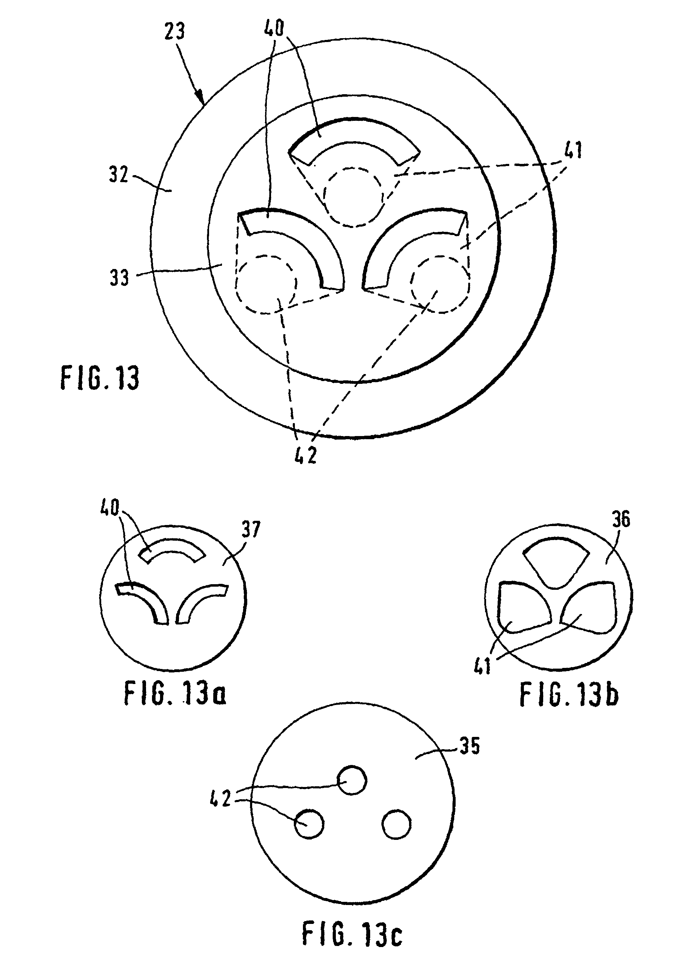

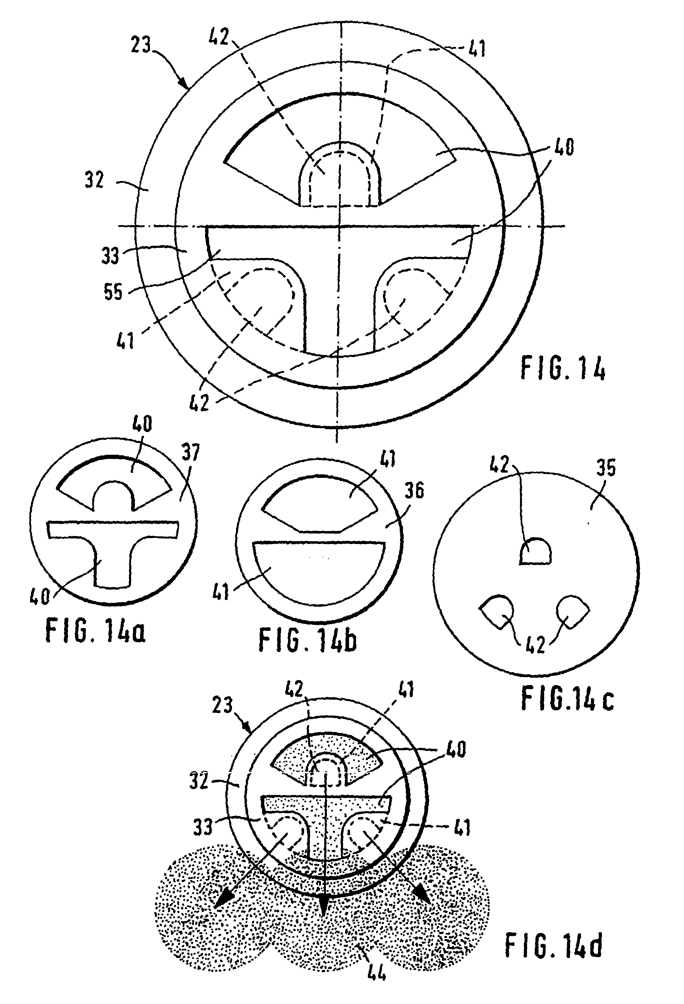

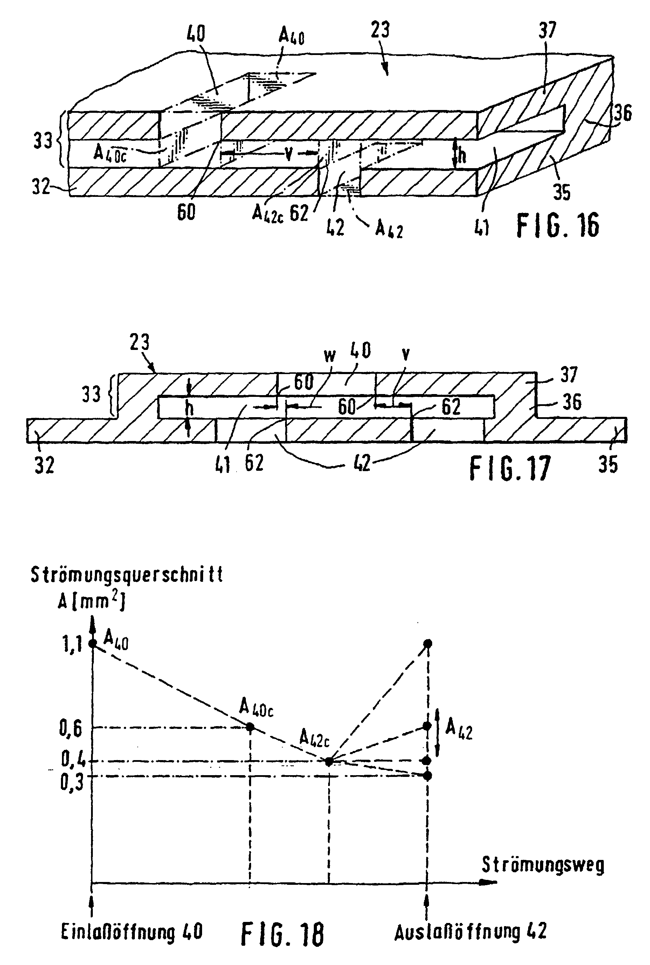

Ausführungsbeispiele der Erfindung sind in der Zeichnung vereinfacht dargestellt und in der nachfolgenden Beschreibung näher erläutert. Es zeigen Figur 1 ein teilweise dargestelltes Einspritzventil mit einer ersten erfindungsgemäßen Lochscheibe, Figur 2 eine zweite Lochscheibe in einer Draufsicht, Figuren 2a bis 2c die einzelnen Funktionsebenen der Lochscheibe gemäß Figur 2, Figur 3 eine Lochscheibe im Schnitt entlang der Linie III-III in Figur 2, Figur 4 eine dritte Lochscheibe in einer Draufsicht, Figur 4a ein mit einer Lochscheibe gemäß Figur 4 erzielbares flaches Strahlbild, Figur 4b ein mit einer Lochscheibe gemäß Figur 4 erzielbares, zwei Einzelstrahlen umfassendes Strahlbild, Figur 5 eine vierte Lochscheibe in einer Draufsicht, Figur 6 eine fünfte Lochscheibe in einer Draufsicht, Figur 7 eine sechste Lochscheibe in einer Draufsicht, Figur 8 eine siebente Lochscheibe in einer Draufsicht, Figur 9 eine Lochscheibe im Schnitt entlang der Linie IX-IX in Figur 8, Figur 10 eine achte Lochscheibe in einer Draufsicht, Figur 11 eine neunte Lochscheibe in einer Draufsicht, Figuren 11a bis 11c die einzelnen Funktionsebenen der Lochscheibe gemäß Figur 11, Figur 11d ein mit einer Lochscheibe gemäß Figur 11 erzielbares kegelstumpfförmiges Strahlbild, Figur 12 eine zehnte Lochscheibe in einer Draufsicht, Figur 13 eine elfte Lochscheibe in einer Draufsicht, Figuren 13a bis 13c die einzelnen Funktionsebenen der Lochscheibe gemäß Figur 13, Figur 14 eine zwölfte Lochscheibe in einer Draufsicht, Figuren 14a bis 14c die einzelnen Funktionsebenen der Lochscheibe gemäß Figur 14, Figur 14d ein mit einer Lochscheibe gemäß Figur 14 erzielbares, einseitig gerichtetes, asymmetrisches Strahlbild, Figur 15 eine dreizehnte Lochscheibe in einer Draufsicht, Figur 16 eine aufgeschnittene Lochscheibe in vereinfachter Form, Figur 17 einen Längsschnitt durch eine Lochscheibe zur Verdeutlichung des Versatzes bzw. der Überlappung von Einlaßöffnungskanten und Auslaßöffnungskanten und Figur 18 ein Diagramm des Strömungsquerschnitts über den Strömungsweg in einer erfindungsgemäßen Lochscheibe mit beispielhaften Werten für eine Lochscheibe gemäß Figur 4.

### Beschreibung der Ausführungsbeispiele

In der Figur 1 ist als ein Ausführungsbeispiel ein Ventil in der Form eines Einspritzventils für Brennstoffeinspritzanlagen von gemischverdichtenden fremdgezündeten Brennkraftmaschinen teilweise dargestellt. Das Einspritzventil hat einen rohrförmigen Ventilsitzträger 1, in dem konzentrisch zu einer Ventillängsachse 2 eine Längsöffnung 3 ausgebildet ist. In der Längsöffnung 3 ist eine z. B. rohrförmige Ventilnadel 5 angeordnet, die an ihrem stromabwärtigen Ende 6 mit einem z. B. kugelförmigen Ventilschließkörper 7, an dessen Umfang beispielsweise fünf Abflachungen 8 zum Vorbeiströmen des Brennstoffs vorgesehen sind, fest verbunden ist.

Die Betätigung des Einspritzventils erfolgt in bekannter Weise, beispielsweise elektromagnetisch. Zur axialen Bewegung der Ventilnadel 5 und damit zum Öffnen entgegen der Federkraft einer nicht dargestellten Rückstellfeder bzw. Schließen des Einspritzventils dient ein schematisch angedeuteter elektromagnetischer Kreis mit einer Magnetspule 10, einem Anker 11 und einem Kern 12. Der Anker 11 ist mit dem dem Ventilschließkörper 7 abgewandten Ende der Ventilnadel 5 durch z. B. eine Schweißnaht mittels eines Lasers verbunden und auf den Kern 12 ausgerichtet.

Zur Führung des Ventilschließkörpers 7 während der Axialbewegung dient eine Führungsöffnung 15 eines Ventilsitzkörpers 16, der in das stromabwärts liegende, dem Kern 12 abgewandte Ende des Ventilsitzträgers 1 in der konzentrisch zur Ventillängsachse 2 verlaufenden Längsöffnung 3 durch Schweißen dicht montiert ist. An seiner dem Ventilschließkörper 7 abgewandten, unteren Stirnseite 17 ist der Ventilsitzkörper 16 mit einem z. B. topfförmig ausgebildeten Lochscheibenträger 21 konzentrisch und fest verbunden, der somit zumindest mit einem äußeren Ringbereich 22 unmittelbar an dem Ventilsitzkörper 16 anliegt. Der Lochscheibenträger 21 weist dabei eine ähnliche Form auf wie bereits bekannte topfförmige Spritzlochscheiben, wobei ein mittlerer Bereich des Lochscheibenträgers 21 mit einer Durchgangsöffnung 20 ohne Zumeßfunktion versehen ist.

Eine erfindungsgemäß ausgebildete Lochscheibe 23 ist stromaufwärts der Durchgangsöffnung 20 derart angeordnet, daß sie die Durchgangsöffnung 20 vollständig überdeckt. Die Lochscheibe 23 stellt nur ein Einsatzteil dar, das in den Lochscheibenträger 21 einsetzbar ist. Der Lochscheibenträger 21 ist mit einem Bodenteil 24 und einem Halterand 26 ausgeführt. Der Halterand 26 erstreckt sich in axialer Richtung dem Ventilsitzkörper 16 abgewandt und ist bis zu seinem Ende hin konisch nach außen gebogen. Das Bodenteil 24 wird von dem äußeren Ringbereich 22 und der zentralen Durchgangsöffnung 20 gebildet.

Die Verbindung von Ventilsitzkörper 16 und Lochscheibenträger 21 erfolgt beispielsweise durch eine umlaufende und dichte, mittels eines Lasers ausgebildete erste Schweißnaht 25. Durch diese Art der Montage ist die Gefahr einer unerwünschten Verformung des Lochscheibenträgers 21 in seinem mittleren Bereich mit der Durchgangsöffnung 20 und der dort stromaufwärts angeordneten Lochscheibe 23 vermieden. Der Lochscheibenträger 21 ist im Bereich des Halterandes 26 des weiteren mit der Wandung der Längsöffnung 3 im Ventilsitzträger 1 beispielsweise durch eine umlaufende und dichte zweite Schweißnaht 30 verbunden.

Die im Bereich der Durchgangsöffnung 20 innerhalb der kreisförmigen Schweißnaht 25 zwischen dem Lochscheibenträger 21 und dem Ventilsitzkörper 16 einklemmbare Lochscheibe 23 ist beispielsweise gestuft ausgeführt. Ein oberer, einen kleineren Durchmesser als ein Grundbereich 32 aufweisender Lochscheibenbereich 33 ragt dabei in eine stromabwärts einer Ventilsitzfläche 29 folgende zylindrische Austrittsöffnung 31 des Ventilsitzkörpers 16 maßgenau hinein. Für diesen Bereich Lochscheibenbereich 33/Auscrittsöffnung 31 kann auch eine Preßpassung vorgesehen sein. Der über den Lochscheibenbereich 33 radial hinausragende und somit einklemmbare Grundbereich 32 der Lochscheibe 23 liegt an der unteren Stirnseite 17 des Ventilsitzkörpers 16 an, so daß an dieser Stelle das Bodenteil 24 des Lochscheibenträgers 21 mit geringem Abstand von der Stirnseite 17 entfernt liegt. Während der Lochscheibenbereich 33 z. B. zwei Funktionsebenen, nämlich eine mittlere und eine obere Funktionsebene, der Lochscheibe 23 umfaßt, bildet eine untere Funktionsebene den Grundbereich 32 allein. Eine Funktionsebene soll dabei über ihre axiale Erstreckung jeweils eine weitgehend konstante Öffnungskontur besitzen.

Die Einschubtiefe des aus Ventilsitzkörper 16, topfförmigem Lochscheibenträger 21 und Lochscheibe 23 bestehenden Ventilsitzteils in die Längsöffnung 3 bestimmt die Größe des Hubs der Ventilnadel 5, da die eine Endstellung der Ventilnadel 5 bei nicht erregter Magnetspule 10 durch die Anlage des Ventilschließkörpers 7 an der Ventilsitzfläche 29 des Ventilsitzkörpers 16 festgelegt ist. Die andere Endstellung der Ventilnadel 5 wird bei erregter Magnetspule 10 beispielsweise durch die Anlage des Ankers 11 an dem Kern 12 festgelegt. Der Weg zwischen diesen beiden Endstellungen der Ventilnadel 5 stellt somit den Hub dar. Der kugelförmige Ventilschließkörper 7 wirkt mit der sich in Strömungsrichtung kegelstumpfförmig verjüngenden Ventilsitzfläche 29 des Ventilsitzkörpers 16 zusammen, die in axialer Richtung zwischen der Führungsöffnung 15 und der unteren Austrittsöffnung 31 des Ventilsitzkörpers 16 ausgebildet ist.

Die in der Austrittsöffnung 31 des Ventilsitzkörpers 16 angeordnete und durch den Lochscheibenträger 21 auch unmittelbar an der Stirnseite 17 des Ventilsitzkörpers 16 festgehaltene Lochscheibe 23 ist in der Figur 1 nur vereinfacht und beispielhaft dargestellt und wird anhand der nachfolgenden Figuren näher beschrieben. Das Einsetzen der Lochscheibe 23 mit einem Lochscheibenträger 21 und eine Klemmung als Befestigung ist nur eine mögliche Variante des Anbringens der Lochscheibe 23 stromabwärts der Ventilsitzfläche 29. Eine solche Einspannung als indirekte Befestigung der Lochscheibe 23 am Ventilsitzkörper 16 hat den Vorteil, daß temperaturbedingte Verformungen vermieden werden, die eventuell bei Verfahren wie Schweißen oder Löten bei einer direkten Befestigung der Lochscheibe 23 auftreten könnten. Der Lochscheibenträger 21 stellt jedoch keineswegs eine ausschließliche Bedingung zur Befestigung der Lochscheibe 23 dar. Da die Befestigungsmöglichkeiten nicht erfindungswesentlich sind, soll hier nur der Verweis auf übliche bekannte Fügeverfahren, wie Schweißen, Löten oder Kleben, erfolgen.

Die in den Figuren 2 bis 15 dargestellten Lochscheiben 23 werden in mehreren metallischen Funktionsebenen durch galvanische Abscheidung aufgebaut (Multilayergalvanik). Aufgrund der tiefenlithographischen, galvanotechnischen Herstellung gibt es besondere Merkmale in der Konturgebung, von denen hiermit einige in Kurzform zusammenfassend aufgeführt sind:
- Funktionsebenen mit über die Scheibenfläche konstanter Dicke,
- durch die tiefenlithographische Strukturierung weitgehend senkrechte Einschnitte in den Funktionsebenen, welche die jeweils durchströmten Hohlräume bilden (fertigungstechnisch bedingte Abweichungen von ca. 3° gegenüber optimal senkrechten Wandungen können auftreten),
- gewünschte Hinterschneidungen und Überdeckungen der Einschnitte durch mehrlagigen Aufbau einzeln strukturierter Metallschichten,
- Einschnitte mit beliebigen, weitgehend achsparallele Wandungen aufweisenden Querschnittsformen,
- einteilige Ausführung der Lochscheibe, da die einzelnen Metallabscheidungen unmittelbar aufeinander erfolgen.

An dieser Stelle soll eine kurze Begriffsdefinition erfolgen, da die Begriffe "Schicht" und "Funktionsebene" verwendet sind. Eine Funktionsebene der Lochscheibe 23 stellt eine Lage dar, über deren axialer Erstreckung die Kontur einschließlich der Anordnung aller Öffnungen zueinander und der Geometrie jeder einzelnen Öffnung weitgehend konstant bleibt. Unter einer Schicht soll dagegen die in einem Galvanikschritt aufgebaute Lage der Lochscheibe 23 verstanden werden. Eine Schicht kann jedoch mehrere Funktionsebenen aufweisen, die z. B. mit dem sogenannten lateralen Überwachsen herstellbar sind. In einem Galvanikschritt werden dann mehrere Funktionsebenen (z. B. bei einer drei Funktionsebenen umfassenden Lochscheibe 23 die mittlere und die obere Funktionsebene) gebildet, die eine zusammenhängende Schicht darstellen. Die jeweiligen Funktionsebenen weisen dabei jedoch, wie oben bereits erwähnt, unterschiedliche Öffnungskonturen (Einlaß-, Auslaßöffnungen, Kanäle) zur jeweils unmittelbar folgenden Funktionsebene auf. Die einzelnen Schichten der Lochscheibe 23 werden nacheinander galvanisch abgeschieden, so daß sich die Folgeschicht aufgrund galvanischer Haftung fest mit der darunterliegenden Schicht verbindet und alle Schichten zusammen dann eine einteilige Lochscheibe 23 bilden. Die einzelnen Funktionsebenen bzw. Schichten der Lochscheibe 23 sind daher mit einzeln hergestellten Düsenplättchen bei bekannten Lochscheiben des Standes der Technik nicht vergleichbar.

In den folgenden Abschnitten wird nur in Kurzform das Verfahren zur Herstellung der Lochscheiben 23 gemäß der Figuren 1 bis 16 erläutert. Ausführlich wurden sämtliche Verfahrensschritte der galvanischen Metallabscheidung zur Herstellung einer Lochscheibe bereits in der EP-A-0 787 256 (Stand der Technik gemäß Art. 54(3) EPU) beschrieben. Aufgrund der hohen Anforderungen an die Strukturdimensionen und die Präzision von Einspritzdüsen gewinnen Mikrostrukturierungsverfahren heute eine zunehmende Bedeutung für ihre großtechnische Herstellung. Im allgemeinen wird für den Fluß des Fluids, z. B. des Brennstoffs, innerhalb der Düse bzw. der Lochscheibe ein Verlaufsweg gefordert, der die bereits angesprochene Turbulenzbildung innerhalb der Strömung begünstigt. Charakteristisch für das Verfahren der sukzessiven Anwendung von photolithographischen Schritten (UV-Tiefenlithographie) und anschließender Mikrogalvanik ist, daß es auch in großflächigem Maßstab eine hohe Präzision der Strukturen gewährleistet, so daß es ideal für eine Massenfertigung mit sehr großen Stückzahlen einsetzbar ist. Auf einem Wafer kann eine Vielzahl von Lochscheiben 23 gleichzeitig gefertigt werden.

Ausgangspunkt für das Verfahren ist eine ebene und stabile Trägerplatte, die z. B. aus Metall (Titan, Kupfer), Silizium, Glas oder Keramik bestehen kann. Auf die Trägerplatte wird optional zunächst wenigstens eine Hilfsschicht aufgalvanisiert. Dabei handelt es sich beispielsweise um eine Galvanikstartschicht (z. B. Cu), die zur elektrischen Leitung für die spätere Mikrogalvanik benötigt wird. Die Galvanikstartschicht kann auch als Opferschicht dienen, um später ein einfaches Vereinzeln der Lochscheibenstrukturen durch Ätzung zu ermöglichen. Das Aufbringen der Hilfsschicht (typischerweise CrCu oder CrCuCr) geschieht z. B. durch Sputtern oder durch stromlose Metallabscheidung. Nach dieser Vorbehandlung der Trägerplatte wird auf die Hilfsschicht ein Photoresist (Photolack) ganzflächig aufgebracht.

Die Dicke des Photoresists sollte dabei der Dicke der Metallschicht entsprechen, die in dem später folgenden Galvanikprozeß realisiert werden soll, also der Dicke der unteren Schicht bzw. Funktionsebene der Lochscheibe 23. Die zu realisierende Metallstruktur soll mit Hilfe einer photolithographischen Maske invers in dem Photoresist übertragen werden. Eine Möglichkeit besteht darin, den Photoresist direkt über die Maske mittels UV-Belichtung zu belichten (UV-Tiefenlithographie).

Die letztlich im Photoresist entstehende Negativstruktur zur späteren Funktionsebene der Lochscheibe 23 wird galvanisch mit Metall (z. B. Ni, NiCo) aufgefüllt (Metallabscheidung). Das Metall legt sich durch das Galvanisieren eng an die Kontur der Negativstruktur an, so daß die vorgegebenen Konturen formtreu in ihm reproduziert werden. Um die Struktur der Lochscheibe 23 zu realisieren, müssen die Schritte ab dem optionalen Aufbringen der Hilfsschicht entsprechend der Anzahl der gewünschten Schichten wiederholt werden, wobei z. B. zwei Funktionsebenen in einem Galvanikschritt erzeugt werden (laterales Überwachsen). Für die Schichten einer Lochscheibe 23 können auch unterschiedliche Metalle verwendet werden, die jedoch nur in einem jeweils neuen Galvanikschritt einsetzbar sind. Abschließend erfolgt das Vereinzeln der Lochscheiben 23. Dazu wird die Opferschicht weggeätzt, wodurch die Lochscheiben 23 von der Trägerplatte abheben. Danach werden die Galvanikstartschichten durch Ätzung entfernt und der verbliebene Photoresist aus den Metallstrukturen herausgelöst.

Die Figur 2 zeigt ein bevorzugtes Ausführungsbeispiel einer Lochscheibe 23 in einer Draufsicht. Die Lochscheibe 23 ist als flaches, kreisförmiges Bauteil ausgeführt, das mehrere, beispielsweise drei, axial aufeinanderfolgende Funktionsebenen aufweist. Besonders die Figur 3, die eine Schnittdarstellung entlang einer Linie III-III in Figur 2 ist, verdeutlicht den Aufbau der Lochscheibe 23 mit ihren drei Funktionsebenen, wobei die zuerst aufgebaute, untere Funktionsebene 35, die der zuerst abgeschiedenen Schicht bzw. dem Grundbereich 32 der Lochscheibe 23 entspricht, einen größeren Außendurchmesser besitzt als die beiden nachfolgend aufgebauten Funktionsebenen 36 und 37, die zusammen den Lochscheibenbereich 33 bilden und z. B. in einem Galvanikschritt hergestellt sind. Die obere Funktionsebene 37 weist eine Einlaßöffnung 40 mit einem möglichst großen Umfang auf, die eine Kontur ähnlich einer stilisierten Fledermaus (oder eines Doppel-H) besitzt. Die Einlaßöffnung 40 weist einen Querschnitt auf, der als teilweise abgerundetes Rechteck mit zwei jeweils gegenüberliegenden, rechteckförmigen Einschnürungen 45 und somit drei wiederum über die Einschnürungen 45 hinwegstehenden Einlaßbereichen 46 beschreibbar ist. Die drei Einlaßbereiche 46 stellen bezogen auf die mit einer Fledermaus vergleichbaren Kontur den Körper/Rumpf und die zwei Flügel der Fledermaus (bzw. die Querbalken zu dem Längsbalken des Doppel-H) dar. Mit z. B. jeweils gleichem Abstand zur Ventillängsachse 2 und damit zur Mittelachse der Lochscheibe 23 und um diese beispielsweise auch symmetrisch angeordnet sind in der unteren Funktionsebene 35 vier rechteckförmige Auslaßöffnungen 42 vorgesehen.

Die rechteckförmigen/quadratischen Auslaßöffnungen 42 liegen bei einer Projektion aller Funktionsebenen 35, 36, 37 in eine Ebene (Figur 2) teilweise oder weitgehend in den Einschnürungen 45 der oberen Funktionsebene 37, da die Einschnürungen 45 letztlich auch drei Seiten eines Rechtecks darstellen. Die Auslaßöffnungen 42 liegen mit einem Versatz zur Einlaßöffnung 40 vor, d. h. in der Projektion wird die Einlaßöffnung 40 an keiner Stelle die Auslaßöffnungen 42 überdecken. Der Versatz kann dabei jedoch in verschiedene Richtungen unterschiedlich groß sein. Wie in Figur 2 gezeigt, ist z. B. der Versatz der Auslaßöffnungen 42 seitlich zu den Einlaßbereichen 46 der Einlaßöffnung 40 hin kleiner als der Versatz der Auslaßöffnungen 42 zu den eingeschnürten Bereichen der Einlaßöffnung 40 hin.

Um eine Fluidströmung von der Einlaßöffnung 40 bis hin zu den Auslaßöffnungen 42 zu gewährleisten, ist in der mittleren Funktionsebene 36 ein Kanal 41 (cavity) ausgebildet, der eine Kavität darstellt. Der eine Kontur eines abgerundeten Rechtecks aufweisende Kanal 41 besitzt eine solche Größe, daß er in der Projektion die Einlaßöffnung 40 vollständig überdeckt und besonders in den Bereichen der Einschnürungen 45 deutlich über die Einlaßöffnung 40 hinausragt, also einen größeren Abstand zur Mittelachse der Lochscheibe 23 als die Einschnürungen 45 hat. Die vier Auslaßöffnungen 42 stehen z. B. teilweise auf der den Einschnürungen 45 gegenüberliegenden Seite nochmals über die äußere Begrenzung des Kanals 41 über, wie es besonders gut die Figur 3 verdeutlicht. Diese über den Kanal 41 hinwegstehenden Auslaßöffnungen 42 bieten die Möglichkeit eines Abspritzens des Fluids mit großem Strahlwinkel. Derartige Hinterschneidungen sind mit der Multilayergalvanik problemlos darstellbar. Die in Figur 3 gezeigten idealen senkrechten Wandungen aller Öffnungsbereiche 40, 41 und 42 können fertigungstechnisch bedingt Abweichungen von maximal ca. 3° bis 4° aufweisen, so daß sich alle Öffnungsbereiche 40, 41 und 42 in Strömungsrichtung gesehen eventuell minimal in den oben angegebenen Winkelbereichen von der Senkrechten abweichend verjüngen.

In den Figuren 2a, 2b und 2c sind die Funktionsebenen 37, 36 und 35 nochmals vereinzelt dargestellt, um die Öffnungskontur jeder einzelnen Funktionsebene 37, 36 und 35 genau zu erkennen. Jede einzelne Figur ist letztlich eine vereinfachte Schnittdarstellung horizontal entlang jeder Funktionsebene 37, 36 und 35. Um die Öffnungskonturen jeder einzelnen Funktionsebene 37, 36 und 35 besser zu verdeutlichen, wird auf eine Schraffur und die Körperkanten der anderen Funktionsebenen verzichtet. Es soll nochmals jedoch betont werden, daß die drei Funktionsebenen 37, 36 und 35 zusammen eine einteilige Lochscheibe 23 darstellen.

Bei einem Durchmesser von ca. 2 bis 2,5 mm besitzt die Lochscheibe 23 z. B. eine Dicke von 0,3 mm, wobei alle Funktionsebenen 35, 36 und 37 beispielsweise jeweils 0,1 mm stark sind. Besonders die mittleren Funktionsebenen 36 mit ihren als Kavitäten ausgebildeten Kanälen 41 werden am ehesten bei verschiedenen Ausführungsformen variabel bezüglich der Dicke der Funktionsebene 36 gestaltet werden, um so sehr einfach über das Verhältnis von Versatz v von Einlaß- zu Auslaßöffnung 40 und 42 zur Höhe h der Kavität 41 die Strömung zu beeinflussen (siehe Figur 16). Über die Höhe h des Kanals 41 werden so senkrecht im Kanal 41 aufgespannte Flächen entsprechend eines gewünschten Verlaufs (Figur 18) eingepaßt. Diese Größenangaben zu den Abmessungen der Lochscheibe 23 sowie alle weiteren in der Beschreibung angegebenen Maße dienen nur dem besseren Verständnis und schränken die Erfindung in keiner Weise ein. Auch die relativen Abmaße der einzelnen Strukturen der Lochscheibe 23 in sämtlichen Figuren sind nicht unbedingt maßstäblich.

Aufgrund des bereits angesprochenen Versatzes v der Auslaßöffnungen 42 gegenüber der wenigstens einen Einlaßöffnung 40 ergibt sich ein S-förmiger Strömungsverlauf des Mediums, beispielsweise des Brennstoffs, weshalb diese Lochscheiben 23 S-Typ-Scheiben sind. Durch den radial verlaufenden Kanal 41 erhält das Medium eine Radialgeschwindigkeitskomponente. Die Strömung verliert im kurzen axialen Auslaßdurchtritt ihre Radialgeschwindigkeitskomponente nicht völlig. Vielmehr tritt sie mit einer Ablösung an den der Einlaßöffnung 40 zugewandten Wandungen der Auslaßöffnungen 42 unter einem Winkel zur Ventillängsachse 2 aus der Lochscheibe 23 aus. Die Kombination mehrerer, z. B. asymmetrisch zueinander ausrichtbarer Einzelstrahlen, die sich durch eine entsprechende Anordnung und Ausrichtung von Ein-, Auslaßöffnungen 40 und 42 und Kanälen 41 erzielen lassen, ermöglicht individuelle, komplexe Gesamtstrahlformen mit unterschiedlichen Mengenverteilungen.

Durch den sogenannten S-Schlag innerhalb der Lochscheibe 23 mit mehreren starken Strömungsumlenkungen wird der Strömung eine starke, zerstäubungsfördernde Turbulenz aufgeprägt. Der Geschwindigkeitsgradient quer zur Strömung ist dadurch besonders stark ausgeprägt. Er ist ein Ausdruck für die Änderung der Geschwindigkeit quer zur Strömung, wobei die Geschwindigkeit in der Mitte der Strömung deutlich größer ist als in der Nähe der Wandungen. Die aus den Geschwindigkeitsunterschieden resultierenden erhöhten Scherspannungen im Fluid begünstigen den Zerfall in feine Tröpfchen nahe der Auslaßöffnungen 42. Da die Strömung im Auslaß teilweise abgelöst ist, erfährt sie wegen fehlender Konturführung keine Strömungsberuhigung. Eine besonders hohe Geschwindigkeit weist das Fluid an der abgelösten Seite auf, während die Geschwindigkeit des Fluids zur Seite der Auslaßöffnung 42 mit anliegender Strömung abfällt. Die zerstäubungsfördernden Turbulenzen und Scherspannungen werden somit im Austritt nicht vernichtet.

Durch den S-Schlag bzw. die Strömungsablösung im Auslaß wird in dem Fluid eine feinskalige (hochfrequente) Turbulenz mit Querschwingungen erzeugt, welche den Strahl bzw. die Strahlen unmittelbar nach Austritt aus der Lochscheibe 23 in entsprechend feine Tröpfchen zerfallen läßt. Je größer die sich aus der Turbulenz ergebenden Scherspannungen sind, desto größer ist auch die Streuung der Strömungsvektoren.

In den weiteren Ausführungsbeispielen der nachfolgenden Figuren sind die gegenüber dem in den Figuren 2 und 3 dargestellten Ausführungsbeispiel gleichbleibenden bzw. gleichwirkenden Teile durch die gleichen Bezugszeichen gekennzeichnet. Die in der Figur 4 dargestellte Lochscheibe 23 unterscheidet sich von der Lochscheibe 23 nach Figur 2 nur dadurch, daß der Kanal 41 nun so groß ausgeführt ist, daß in der Projektion auch sämtliche Auslaßöffnungen 42 von ihm überdeckt werden. Somit kann die Fluidströmung durch die überstehende Kanalwandung an allen Stellen des Umfangs jeder Auslaßöffnung 42 in die Auslaßöffnung 42 eintreten, auch an den der Einlaßöffnung 40 abgewandten Seiten der Auslaßöffnungen 42.

Die Figuren 4a und 4b zeigen zwei mögliche Strahlbilder, die mit einer Lochscheibe gemäß Figur 4 erzielbar sind. Die weit in den Einschnürungen 45 angeordneten Auslaßöffnungen 42 erlauben ein flaches Strahlbild (Figur 4a), während durch die Vergrößerung des Versatzes von Einlaßöffnung 40 zu Auslaßöffnungen 42 und damit fast außerhalb der Einschnürungen 45 liegenden Auslaßöffnungen 42 ein zwei Einzelstrahlen umfassendes Strahlbild erzeugbar ist (Figur 4b), weshalb sich eine solche Lochscheibe 23 besonders für sogenannte Zweistrahlventile eignet. Durch z.B. asymmetrisch in den Einschnürungen 45 vorgesehene Auslaßöffnungen 42 lassen sich ebenso Strahlbildvariationen vornehmen. Mit 44 sind die abgespritzten Sprays, die die oben erwähnten Strahlbilder aufweisen, gekennzeichnet. Die in den Figuren 4a und 4b gezeigten Strahlbilder bzw. Modifikationen davon lassen sich mit allen in den Figuren 2 bis 9 gezeigten Lochscheiben 23 erzeugen.

In den Figuren 5, 6 und 7 sind Ausführungsbeispiele von Lochscheiben 23 gezeigt, die Modifizierungen der Lochscheibe 23 nach Figur 4 darstellen. Bei allen diesen Ausführungsbeispielen überdeckt der Kanal 41 (Kavität) jeweils alle Auslaßöffnungen 42, so daß in die Auslaßöffnungen 42 ebenfalls von allen Stellen des Umfangs ein Einströmen des Fluids möglich ist. Die Lochscheibe 23 der Figur 5 weist eine Einlaßöffnung 40 auf, die nur noch die zwei äußeren Einlaßbereiche 46 aufweist, wobei zwischen beiden Einlaßbereichen 46 ein schmaler Verbindungsbereich 48 vorgesehen ist, der durch die beidseitigen Einschnürungen 45 entsteht. Ein mittlerer, breiter Einlaßbereich 46 ist nicht ausgebildet, so daß die Einlaßöffnung 40 knochenförmig (drehankerförmig, doppel-T-förmig) erscheint. Jeweils zwei Auslaßöffnungen 42 sind mit Versatz zur Einlaßöffnung 40 zumindest teilweise in einer der beiden Einschnürungen 45 plaziert, wobei natürlich die Ausbildung der Öffnungen 40 und 42 in den zwei unterschiedlichen Funktionsebenen 37 und 35 erfolgt.

Verlängert man kreisbogenförmig die beiden Einlaßbereiche 46 der Einlaßöffnung 40 der Lochscheibe 23 nach Figur 5, so kommt man zur in Figur 6 dargestellten Lochscheibe 23. Die Einlaßbereiche 46 sind in Form von Kreisbögen ausgehend von dem Verbindungsbereich 48 so weit ausgeführt, daß sich ihre Enden jeweils mit nur noch kleinem Abstand gegenüberstehen und somit fast einen vollständigen Kreisring bilden. Der von der Lochscheibenmitte ausgehende Winkel a des in der oberen Funktionsebene 37 befindlichen Materials zwischen jeweils zwei Enden der Einlaßbereiche 46 beträgt z. B. 40°, so daß die Einlaßbereiche 46 über ca. 280° ausgebildet sind. Die Einlaßöffnung 40 besitzt somit in vorteilhafter Weise einen sehr großen Umfang. Der weitgehend kreisförmig in der mittleren Funktionsebene 36 ausgebildete Kanal 41 besitzt gerade in den Bereichen zwischen jeweils zwei Enden der Einlaßbereiche 46 Einbuchtungen 49, die von der idealen Kreisform zur Ventillängsachse 2 hin radial nach innen ragen. Die Auslaßöffnungen 42 weisen eine von einem Rechteck oder Quadrat abweichende Kontur auf; sie können Querschnitte in Form von Trapezen, Vielecken, abgerundeten Rechtecken, abgerundeten Vielecken, verschobenen Vielecken, aber auch Ellipsen oder Kreisen besitzen. Je nach gewünschtem Versatz können Ein- und Auslaßöffnungen 40 und 42 einander angepaßt werden. Die sehr weit herumgezogenen Einlaßbereiche 46 der Einlaßöffnung 40 sorgen dafür, daß die Auslaßöffnungen 42 von vielen Seiten her angeströmt werden. Die in Figur 7 dargestellte Lochscheibe 23 entsteht durch Kombination der Lochscheiben 23 gemäß Figuren 4 und 6, so daß ein mittlerer Einlaßbereich 46 zusammen mit den beiden äußeren Einlaßbereichen 46 vier Einschnürungen 45 bildet, in die die Auslaßöffnungen 42 in der Projektion eingebettet sind.

Ein auf der Basis der "Fledermaus"-Einlaßöffnung 40 nach Figur 2 oder 4 weiterentwickeltes Konzept einer Lochscheibe 23 zeigen die Figuren 8 und 9, wobei die Figur 9 eine Darstellung eines Schnittes durch die Lochscheibe 23 entlang der Linie IX-IX in Figur 8 ist. Die Auslaßöffnungen 42 und der Kanal 41 sind weitgehend rechteckförmig ausgeführt, wobei der Kanal 41 wiederum wie beim Ausführungsbeispiel nach Figur 4 die Auslaßöffnungen 42 vollständig überdeckt. In einem wesentlichen Punkt unterscheidet sich die Lochscheibe 23 nach Figur 8 von der Lochscheibe 23 nach Figur 4. Die ehemals eine Einlaßöffnung 40 liegt nun in dreigeteilter Form vor, da zwischen zwei gegenüberliegenden Einschnürungen 45 die Einlaßöffnung.40 vollständig unterbrochen ist. Ausgehend von der unteren Funktionsebene 35 wird das Metall galvanisch stegartig in den beiden nachfolgenden Funktionsebenen 36 und 37 abgeschieden, so daß zwei stegförmige Materialbereiche 50 in der oberen Funktionsebene 37 für eine Dreiteilung der Einlaßöffnung 40 sorgen und die darunterliegenden stegförmigen Materialbereiche 51 in der mittleren Funktionsebene 36 Materialinseln inmitten des Kanals 41 darstellen, die spätestens an den Auslaßöffnungen 42 enden. Die Einlaßbereiche 46 der Einlaßöffnungen 40 reichen jeweils genau bis zur Wandung des Kanals 41.

Mit den in den Figuren 2 bis 9 dargestellten Lochscheiben 23 sind hauptsächlich die in den Figuren 4a und 4b gezeigten flachen und zwei (symmetrische) Einzelstrahlen umfassenden Strahlbilder erzielbar. Dabei werden mit den Lochscheiben 23, die fledermausähnliche Einlaßöffnungen 40 aufweisen, größere Strahlwinkel erzeugt als mit den Lochscheiben 23, die knochenförmige Einlaßöffnungen 40 besitzen (bei vergleichbaren Auslaßöffnungen 42). Die Größe des Versatzes zwischen Einlaßöffnungen 40 und Auslaßöffnungen 42 spielt ebenfalls für die Strahlwinkel eine wichtige Rolle.

Die in Figur 10 dargestellte Lochscheibe 23 besitzt eine in ihrer Grundform kreisförmige Einlaßöffnung 40. Vom Umfang her sind in Umfangsrichtung gesehen mehrere, beispielsweise sechs Einschnürungen 45 vorgesehen, wobei zwischen den Einschnürungen 45 jeweils zwangsläufig zahnähnliche Ausbuchtungen 53 radial nach außen stehen. Die Ausbuchtungen 53 sind beispielsweise über den Umfang der Einlaßöffnung 40 gleichmäßig verteilt angeordnet; bei sechs Ausbuchtungen 53 also nach jeweils 60°. Im Querschnitt besitzt die Einlaßöffnung 40 also eine zahnradähnliche Kontur. Die beispielsweise sechs rechteck- oder trapezförmigen Auslaßöffnungen 42 sind mit Versatz in den Einschnürungen 45 der Einlaßöffnung 40 angeordnet bzw. eingebettet. Dabei ragen die Auslaßöffnungen 42 radial z.B. nicht über den Außenumfang der Einlaßöffnung 40 hinaus. Bei diesem Ausführungsbeispiel besitzt die Einlaßöffnung 40 einen besonders großen Umfang, der, wie eine spätere Betrachtung der durchströmten Querschnittsbereiche zeigen wird, besonders vorteilhaft ist. Der kreisförmig ausgebildete Kanal 41 ist so groß gewählt, daß er in der Projektion sowohl die Einlaßöffnung 40 als auch die Auslaßöffnungen 42 vollständig überdeckt. Die Auslaßöffnungen 42 werden somit von allen Seiten angeströmt. Mit dieser Lochscheibe 23 ist ein kegliges Strahlbild erzeugbar.

In den Figuren 11 und 12 sind Lochscheiben 23 dargestellt, die sich durch weitgehend kreuzförmige Einlaßöffnungen 40 auszeichnen. Die Übergänge der einzelnen Schenkel 55 des Kreuzes der Einlaßöffnung 40 sind z. B. abgerundet. Von der Ventillängsachse 2 ausgehend erstrecken sich die vier Schenkel 55 um jeweils 90° entfernt voneinander radial nach außen, wobei zwischen jeweils zwei benachbarten Schenkeln 55 ähnlich den Einschnürungen 45 der Lochscheibe 23 nach Figur 4 durch die Kreuzform gebildete Gebiete eingeschlossen werden, in denen entsprechend in der unteren Funktionsebene 35 jeweils eine Auslaßöffnung 42 mit geringem Versatz zur Einlaßöffnung 40 angeordnet ist. Die Auslaßöffnungen 42 sind auf ihrer zur Ventillängsachse 2 hin zeigenden Seite 56 abgerundet, und zwar z. B. mit einem Radius, der dem Radius der abgerundeten Übergänge der Schenkel 55 entspricht. Im Gegensatz zur der Ventillängsachse 2 zugewandten abgerundeten Seite 56 der Auslaßöffnungen 42 besitzen die Auslaßöffnungen 42 auf der gegenüberliegenden, radial nach außen zeigenden Seite 57 eine weitgehend eckige Kontur, wobei diese äußeren, die Auslaßöffnungen 42 begrenzenden Seiten 57 z. B. leicht gewölbt verlaufen und die Auslaßöffnungen 42 insgesamt eine Dachfensterform bzw. eine tunnelportalähnliche Form aufweisen. Völlig andere Konturen der Auslaßöffnungen 42 sind allerdings ebenso denkbar.

Bei der in Figur 11 gezeigten Lochscheibe 23 ist der Kanal 41 in der mittleren Funktionsebene 36 weitgehend kreisförmig ausgeführt, wobei jedoch in unmittelbarer Nähe zu den Auslaßöffnungen 42 bis an deren äußere Seiten 57 heran der Kanal 41 geringe taillenartige Einengungen 58 als Strömungsleitschaufeln besitzt. Diese Einengungen 58 sorgen dafür, daß das Fluid, insbesondere ein Brennstoff, optimal im Kanal 41 geleitet wird und sehr gezielt den Auslaßöffnungen 42 zuströmen kann. Der Kanal 41 ist ansonsten mit einem solchen Durchmesser ausgeformt, daß er die Schenkel 55 der Einlaßöffnung 40 gerade überdeckt, so daß die Wandungen der Einlaßöffnung 40, die die Enden der Schenkel 55 bilden, unmittelbar in die Wandung des Kanals 41 übergehen. In den Figuren 11a, 11b und 11c sind die Funktionsebenen 37, 36 und 35 vereinzelt dargestellt, so daß die Öffnungsbereiche jeder einzelnen Funktionsebene 37, 36 und 35 eindeutig erkennbar sind. Wie sehr gut der Figur 11b zu entnehmen ist, weist der Kanal 41 in der mittleren Funktionsebene 36 die Form einer stilisierten Blumenblüte bzw. eines vierblättrigen Kleeblattes auf.

Die Lochscheibe 23 der Figur 12 unterscheidet sich hauptsächlich von der Lochscheibe 23 der Figur 11 dadurch, daß der Kanal 41 mit einem kleineren Durchmesser ausgeführt ist, so daß die Auslaßöffnungen 42 teilweise über den Kanal 41 überstehen. Die radial außen liegenden Seiten 57 der Auslaßöffnungen 42 liegen somit außerhalb der Wandung des Kanals 41 ähnlich der in den Figuren 2 und 3 dargestellten Lochscheibe 23. Im Bereich der Enden der vier Schenkel 55 der Einlaßöffnung 40 liegt die den Kanal 41 begrenzende wandung jedoch genau stromabwärts der Wandung der Einlaßöffnung 40, da stets (in allen Ausführungsbeispielen) die gesamte Einlaßöffnung 40 von dem Kanal 41 "untergraben" (in der Projektion überdeckt) sein soll. Wie die Figur 11d veranschaulicht, sind Lochscheiben 23 mit kreuzförmigen Einlaßöffnungen 40 (Figuren 11 und 12) besonders für eine Kegelstrahlabspritzung des Sprays 44 geeignet.

Die Figur 13 zeigt eine Lochscheibe 23, die mehrere, beispielsweise drei Einlaßöffnungen 40 aufweist. Im Unterschied zu allen vorhergehenden Ausführungsbeispielen sind nun auch mehrere Kanäle 41 vorgesehen; jeder Einlaßöffnung 40 ist genau ein Kanal 41 und genau eine Auslaßöffnung 42 zugeordnet. Solche Lochscheiben 23 sind insofern sehr interessant, da mit ihnen außergewöhnliche Strahlbilder erzeugbar sind. Die Lochscheibe 23 besitzt drei Funktionseinheiten mit jeweils einer Einlaßöffnung 40, einem Kanal 41 und einer Auslaßöffnung 42. Je nach gewünschtem Strahlbild sind die Funktionseinheiten asymmetrisch bzw. exzentrisch um die Ventillängsachse 2, die immer auch der Mittelachse der Lochscheibe 23 entspricht, angeordnet. Mit dieser scheinbar ungeordneten Aufteilung sind sehr gut individuelle Strahlrichtungen erzielbar. Bei der Lochscheibe nach Figur 13 verbindet jeweils ein Kanal 41 mit im Querschnitt kreissektorförmiger Kontur eine sichelförmige bzw. kreisringabschnittförmige Einlaßöffnung 40 mit einer kreisförmigen Auslaßöffnung 42. Die Kanäle 41 untergraben bzw. überdecken die jeweils zugeordneten Einlaßöffnungen 40 und Auslaßöffnungen 42 stets vollständig. Die Auslaßöffnungen 42 sind dabei so angeordnet, daß sich vom Strahlbild her ein asymmetrischer Kegel ergibt, da die Einzelstrahlen divergent auseinanderlaufend, also in sich erweiternder Weise in eine Hauptrichtung schräg zur Ventillängsachse 2 zielen. Die Figuren 13a, 13b und 13c zeigen nochmals alle drei Funktionsebenen 37, 36 und 35 vereinzelt zur Verdeutlichung der Öffnungskonturen der jeweiligen Funktionsebene 37, 36 und 35.

Zwei weitere Ausführungsbeispiele von Lochscheiben 23 mit mehreren, hier zwei Einlaßöffnungen 40 zeigen die Figuren 14 und 15. Die beiden Einlaßöffnungen 40 weisen dabei voneinander völlig abweichende Öffnungskonturen auf, da auch diese Lochscheiben 23 der Schiefstrahlerzeugung bzw. der Erzeugung asymmetrischer Strahlbilder dienen sollen. Während die eine Einlaßöffnung 40 drei Schenkel 55 und somit eine T-Form aufweist, besitzt die zweite Einlaßöffnung 40 die Kontur eines Kreisringabschnitts mit einer veränderlichen Breite. Die drei beispielsweise wieder tunnelportalähnlich ausgebildeten Auslaßöffnungen 42, von denen eine der kreisringabschnittförmigen Einlaßöffnung 40 und dem sich daran anschließenden kreissektorförmigen Kanal 41 sowie zwei der T-förmigen Einlaßöffnung 40 und dem stromabwärts folgenden halbkreisförmigen Kanal 41 zugeordnet sind, sind wiederum ähnlich den kreuzförmigen Einlaßöffnungen 40 (Figuren 11 und 12) in den Bereichen zwischen den Schenkeln 55 bzw. im durch den Kreisringabschnitt der einen Einlaßöffnung 40 eingeschlossenen Innenraum eingebettet. In den Figuren 14a, 14b und 14c sind alle drei Funktionsebenen 37, 36 und 35 einzeln dargestellt, wodurch die komplizierten, jedoch einfach durch galvanische Metallabscheidung herstellbaren Öffnungskonturen der Funktionsebenen 37, 36 und 35, besonders die Einlaßöffnungen 40 mit ihren großen Umfängen, sehr gut veranschaulicht werden.

Figur 15 zeigt einige Variationsmöglichkeiten zum Ausführungsbeispiel nach Figur 14. Einerseits können sämtliche Öffnungskonturen verändert werden, so z. B. die Breiten und Längen der Schenkel 55 bzw. des Kreisringabschnitts der Einlaßöffnungen 40 oder auch die Kontur des Kanals 41, der die bereits von der in den Figuren 11 und 11b dargestellten Lochscheibe 23 bekannten Einengungen 58 zur Zuströmoptimierung zu den Auslaßöffnungen 42 aufweist. Mit diesen als Strömungsleitschaufeln dienenden Einengungen 58 sind sehr gut Doppelwirbel in der Horizontalebene der Strömung erzielbar. Andererseits ist bei der Lochscheibe 23 nach Figur 15 auch die Geometrie der einzelnen Öffnungsbereiche zueinander gegenüber der Lochscheibe 23 nach Figur 14 verschoben. Während bei der Lochscheibe 23 in Figur 14 die Ventillängsachse 2 bzw. die Mittelachse der Lochscheibe 23 entlang der Wandung der T-förmigen Einlaßöffnung 40 verläuft, ist bei der Lochscheibe 23 in Figur 15 die T-förmige Einlaßöffnung 40 so in der oberen Funktionsebene 37 plaziert, daß die Ventillängsachse 2 nicht entlang der Wandung, sondern irgendwo mitten durch die Einlaßöffnung 40 verläuft.

Asymmetrische Strahlbilder von abgespritzten Sprays 44 sind besonders mit Lochscheiben 23 gemäß Figuren 13, 14 und 15 erzeugbar. Ein Beispiel eines aus drei Einzelstrahlen gebildeten asymmetrischen Strahlbildes verdeutlicht Figur 14d. Solche Lochscheiben 23 werden insbesondere bei sogenannten schiefstrahlventilen verwendet. Damit wird auch unter ungünstigen Einbaubedingungen ein sehr gezieltes Abspritzen (z.B. auf ein Einlaßventil einer Brennkraftmaschine ohne Wandbenetzung eines Saugrohres) gewährleistet.

Zur Verdeutlichung der wichtigsten Kenngrößen der erfindungsgemäßen Lochscheiben 23 ist in der Figur 16 eine Lochscheibe 23 aufgeschnitten in vereinfachter Form gezeigt. Entscheidende Größen für die Beeinflussung der Strahlform des abzuspritzenden Sprays 44 sind die Höhe h des Kanals 41 (Kavität) sowie der Versatz v zwischen einer bzw. mehrerer der Auslaßöffnung 42 zugewandten Einlaßöffnungskanten 60 und einer bzw. mehrerer der Einlaßöffnung 40 zugewandten Auslaßöffnungskanten 62 im Kanal 41 bzw. das Verhältnis v/h. Wie in fast allen Ausführungsbeispielen gezeigt, ist der Versatz v zwischen der Einlaßöffnung 40 und der Auslaßöffnung 42 meist nicht konstant, so daß ein den Kanal 41 durchströmendes Fluid von der Einlaßöffnung 40 bis zur Auslaßöffnung 42 unterschiedliche Wegstrecken zurücklegen muß. Das Verhältnis v/h wird dabei üblicherweise zwischen 0 und 5, insbesondere zwischen 0 und 2,5 liegen, wobei dieses Verhältnis innerhalb ein und derselben Lochscheibe 23 bzw. von genau einer Einlaßöffnung 40 zu genau einer Auslaßöffnung 42 durchaus variiert.

Anhand des Längsschnitts durch eine Lochscheibe 23 in der Figur 17 soll gezeigt werden, daß für einen S-Schlag in der in einer erfindungsgemäßen Lochscheibe 23 verlaufenden Strömung ein Versatz v keine ausschließliche Bedingung ist. Vielmehr kann es in besonderen Fällen wünschenswert sein, einen "negativen Versatz" bzw. eine Überlappung w von Einlaßöffnungskanten 60 der Einlaßöffnung 40 zu Auslaßöffnungskanten 62 der Auslaßöffnung 42 vorzusehen. Um aber eine S-förmige Strömung bei einer solchen Ausführung immer noch zu gewährleisten, darf die Überlappung w nur sehr klein gewählt werden. Das Verhältnis w/h liegt deshalb nur zwischen 0 und 1. Die Werte 0 für die Verhältnisse v/h und w/h werden dann erreicht, wenn der Versatz v bzw. die Überlappung w 0 betragen, wenn also die Einlaßöffnungskanten 60 und die Auslaßöffnungskanten 62 genau senkrecht (achsparallel) übereinander stehen.

Wie bereits mehrfach bei der Umfangsgröße der Einlaßöffnungen 40 erwähnt, spielen die in der Lochscheibe 23 durchströmten Flächen eine entscheidende Rolle für eine optimale Anwendung der Lochscheiben 23 als S-Typ-Scheiben. Ausgehend von einer begrenzten Größe der Lochscheibe 23 (z. B. Durchmesser des Grundbereichs 32 2,5 mm; Durchmesser des Lochscheibenbereichs 33 2,1 mm), die sich aus immer kleiner werdenden Ventil- bzw. Düsenabmessungen und somit immer kleineren Einbauräumen ergibt, soll die als S-Typ-Scheibe ausgebildete Lochscheibe 23 hydraulisch entdrosselt sein. Um die Drosselwirkung der Einlaßöffnung 40 so klein wie möglich zu halten, sollte ganz allgemein der Eintrittsquerschnitt aller Einlaßöffnungen 40 größer als der Austrittsquerschnitt aller Auslaßöffnungen 42 einer Lochscheibe 23 sein. Die wichtigen, zu berücksichtigenden Flächen bzw. deren Verhältnisse zueinander werden anhand des Diagramms in Figur 18 näher erläutert.

Nachteile von drosselnden Lochscheiben 23, bei denen die bei der erfindungsgemäßen Lochscheibe 23 gewünschten Flächenverhältnisse nicht beachtet werden, sind darin zu sehen, daß im Eintritt der Lochscheibe 23 ein Druckverlust (Impulsverlust) erfolgt, durch den die Durchflußmengen in unerwünschter Weise begrenzt werden. Daraus resultiert ein zu geringer Strömungsdruck bzw. Strömungsimpuls (Strömungsenergieverluste) für eine optimale Zerstäubung des Fluids. Außerdem vergrößern sich bei zu kleinem relativen Eintritt die Toleranzen und Schwankungen der abzuspritzenden Strömungsmengen. Zwei die Strömungsverhältnisse maßgeblich beeinflussende Größen sind eine Eintrittsquerschnittsfläche A_{40c} sowie eine Austrittsquerschnittsfläche A_{42c} im Kanal 41. Die Einlaßöffnung 40 bzw. die Summe aller Einlaßöffnungen 40 besitzt eine Querschnittsfläche A₄₀, die in der oberen Funktionsebene 37 aufgespannt ist. Gleiches gilt für die Auslaßöffnung 42 bzw. die Summe aller Auslaßöffnungen 42 mit der Querschnittsfläche A₄₂ in der unteren Funktionsebene 35.

Die Querschnittsflächen A₄₀ bzw. A₄₂ stellen die wahren aufgespannten offenen Flächen im Einlaß bzw. Auslaß der gesamten Lochscheibe 23 dar. Ausgehend von diesen beiden Querschnittsflächen A₄₀ und A₄₂ werden dazu senkrecht die beiden Querschnittsflächen A_{40c} und A_{42c} aufgespannt. Bei der Eintrittsquerschnittsfläche A_{40c} handelt es sich um das Produkt der Summe der Umfänge der Einlaßöffnungen 40 und der Höhe h des Kanals 41; die Austrittsquerschnittsfläche A_{42c} wird gebildet durch Multiplikation der Summe der Umfänge aller Auslaßöffnungen 42 mit der Höhe h des Kanals 41. Das Diagramm in Figur 18 mit beispielhaften Werten für eine Lochscheibe 23 gemäß Figur 4 verdeutlicht sehr anschaulich, daß A₄₀ > A_{40c} > A_{42c} für die entdrosselte Lochscheibe 23 gelten soll. Um die Eintrittsquerschnittsfläche A_{40c} relativ zur Austrittsquerschnittsfläche A_{42c} bei vorgegebenen begrenzten Einbauplätzen groß zu bekommen, ist es vorteilhaft, die Umfänge der Einlaßöffnungen 40 zu vergrößern. Um eine hohe Zerstäubungsenergie in der Strömung zu behalten, sind die Einlaßöffnungen 40 nicht nur rechteckförmig, quadratisch, kreisförmig oder elliptisch wie bei bekannten Lochscheiben ausgeführt, sondern, wie es die Figuren 2 bis 15 verdeutlichen, mäandiert, fledermausförmig, kreuzförmig, zahnradähnlich, knochenförmig, sichelförmig, T-förmig, kreisringabschnittförmig oder anderweitig ausgestaltet. An die Größe der Querschnittsfläche A₄₂ sind keine speziellen Forderungen gestellt. Sie kann größer oder kleiner als die Austrittsquerschnittsfläche A_{42c} sein, aber auch eine gleiche Größe aufweisen. Auf jeden Fall wird die Querschnittsfläche A₄₂ kleiner oder gleich der Querschnittsfläche A₄₀ sein.

Zusammenfassend kann folgendes festgehalten werden:
1. Die Strahlbildbeeinflussung erfolgt hauptsächlich durch
   - den Versatz v,
   - die die Auslaßöffnungen 42 umgebenden Bereiche der Kanäle 41 in allen Richtungen (Rückräume, Seitenräume),
   - die Größe und Form der Auslaßöffnungen 42.
2. Die SMD-Beeinflussung (Sauter Mean Diameter, Tröpfchengröße im Spray 44) erfolgt hauptsächlich durch
   - die Höhe h und die Breite des Kanals 41,
   - die Querschnittsfläche A₄₀ der Einlaßöffnungen 40,
   - die Querschnittsfläche A₄₂ der Auslaßöffnungen 42.
3. Die Beeinflussung der statischen Abspritzmenge erfolgt hauptsächlich durch
   - die Höhe h des Kanals 41,
   - die Querschnittsfläche A₄₂ der Auslaßöffnungen 42.

Alle beschriebenen Lochscheiben 23 sind nicht ausschließlich für den Gebrauch an Einspritzventilen vorgesehen; sie können vielmehr auch z. B. bei Lackierdüsen, bei Inhalatoren, bei Tintenstrahldruckern oder bei Gefriertrockenverfahren, zum Ab- bzw. Einspritzen von Flüssigkeiten, wie z. B. Getränken, zum Zerstäuben von Medikamenten zum Einsatz kommen. Zur Erzeugung feiner Sprays, z. B. mit großen Winkeln, eignen sich die mittels Multilayergalvanik hergestellten und als S-Typ-Scheiben ausgebildeten Lochscheiben 23 ganz allgemein.

## Patentansprüche

1. Lochscheibe (23), insbesondere für Einspritzventile, aus wenigstens einem metallischen Material, mit einem vollständigen Durchgang für ein Fluid, mit wenigstens einer Einlaß- (40) und wenigstens einer Auslaßöffnung (42), wobei jede Einlaßöffnung (40) in einer oberen Funktionsebene (37) der Lochscheibe (23) und jede Auslaßöffnung (42) in einer unteren Funktionsebene (35) der Lochscheibe (23) eingebracht ist, mit wenigstens einem Kanal (41) , der in einer zwischen der oberen Funktionsebene (37) und der unteren Funktionsebene (35) befindlichen mittleren Funktionsebene (36) vorgesehen ist und der den vollständigen Durchgang für ein Fluid von der wenigstens einen Einlaß- (40) zu der wenigstens einen Auslaßöffnung (42) ermöglicht, wobei
a) die aus mehreren Funktionsebenen (35, 36, 37) aufgebaute Lochscheibe (23) einteilig ausgebildet ist,
b) eine das Produkt der Umfänge aller Einlaßöffnungen (40) mit der Höhe h des Kanals (41) senkrecht zum Querschnitt aller Einlaßöffnungen (40) im Kanal (41) darstellende Eintrittsquerschnittsfläche A_{40c} aufgespannt ist, die größer ist als eine Austrittsquerschnittsfläche A_{42c} im Kanal (41), die sich als Produkt der Umfänge aller Auslaßöffnungen (42) und der Höhe h des Kanals (41) senkrecht zum Querschnitt aller Auslaßöffnungen (42) ergibt, und
c) die Summe der Querschnittsflächen A₄₀ aller Einlaßöffnungen (40) größer ist als die Eintrittsquerschnittsfläche A_{40c} im Kanal (41).

2. Lochscheibe nach Anspruch 1 , **dadurch gekennzeichnet, daß** die wenigstens eine Einlaßöffnung (40) eine andere Öffnungskontur als die wenigstens eine Auslaßöffnung (42) besitzt.

3. Lochscheibe nach einem der vorhergehenden Ansprüche, **dadurch gekennzeichnet, daß** die Summe der Querschnittsflächen A₄₀ aller Einlaßöffnungen (40) ein Betrag ist, der größer oder gleich dem Wert der Summe der Querschnittsflächen A₄₂ aller Auslaßöffnungen (42) ist.

4. Lochscheibe nach einem der vorhergehenden Ansprüche, **dadurch gekennzeichnet, daß** jeder Kanal (41) eine solche Erstreckung hat, daß er jede mit ihm in Verbindung stehende Einlaßöffnung (40) vollständig untergräbt, so daß in der Projektion die Einlaßöffnungen (40) jeweils von den Kanälen (41) vollständig überdeckt werden.

5. Lochscheibe nach einem der vorhergehenden Ansprüche, **dadurch gekennzeichnet, daß** jeder Kanal (41) eine solche Erstreckung hat, daß er jede mit ihm in Verbindung stehende Auslaßöffnung (42) wenigstens teilweise überdeckt.

6. Lochscheibe nach einem der vorhergehenden Ansprüche, **dadurch gekennzeichnet, daß** die Anzahl von Einlaßöffnungen (40) und Auslaßöffnungen (42) ungleich ist.

7. Lochscheibe nach einem der vorhergehenden Ansprüche, **dadurch gekennzeichnet, daß** die Einlaßöffnungen (40) und die Auslaßöffnungen (42) so angeordnet sind, daß sie sich bei einer Projektion in eine Ebene an keiner Stelle überdecken, so daß ein vollständiger Versatz v zwischen den Einlaßöffnungen (40) und den Auslaßöffnungen (42) vorhanden ist.

8. Lochscheibe nach Anspruch 1, **dadurch gekennzeichnet, daß** die Funktionsebenen (35, 36, 37) der Lochscheibe (23) mittels galvanischer Metallabscheidung (Multilayergalvanik) aufeinander aufgebaut sind.

9. Lochscheibe nach Anspruch 8, **dadurch gekennzeichnet, daß** jede Funktionsebene (35, 36, 37) eine charakteristische Öffnungsstruktur (40, 41, 42) besitzt, die sich von der jeweils unmittelbar in Strömungsrichtung darauffolgenden unterscheidet.

10. Lochscheibe nach Anspruch 9, **dadurch gekennzeichnet, daß** die Anzahl der Funktionsebenen (35, 36, 37) größer oder gleich der Anzahl der galvanisch abgeschiedenen Schichten bzw. der dafür notwendigen Galvanikschritte ist.

11. Lochscheibe nach einem der vorhergehenden Ansprüche, **dadurch gekennzeichnet, daß** in der oberen Funktionsebene (37) nur eine Einlaßöffnung (40) vorgesehen ist, die mit nur einem Kanal (41) in der mittleren Funktionsebene (36) in Verbindung steht, an den sich in der unteren Funktionsebene (35) mehrere Auslaßöffnungen (42) anschließen.

12. Lochscheibe nach Anspruch 11, **dadurch gekennzeichnet, daß** die Einlaßöffnung (40) die Form einer stilisierten Fledermaus bzw. eines Doppel-H besitzt, also einen mittleren und zwei äußere Einlaßbereiche (46) aufweist, die durch jeweils dazwischen ausgebildete Einschnürungen (45) getrennt voneinander sind, und die Auslaßöffnungen (42) in der Projektion jeweils in den Einschnürungen (45) zumindest teilweise angeordnet sind.

13. Lochscheibe nach Anspruch 11, **dadurch gekennzeichnet, daß** die Einlaßöffnung (40) knochenförmig, drehankerförmig oder doppel-T-förmig ausgebildet ist, wobei zwei äußere breitere Einlaßbereiche (46) durch einen schmaleren Verbindungsbereich (48) miteinander verbunden sind, und die Auslaßöffnungen (42) in der Projektion in den sich durch den schmaleren Verbindungsbereich (48) ergebenden Einschnürungen (45) zumindest teilweise angeordnet sind.

14. Lochscheibe nach Anspruch 11, **dadurch gekennzeichnet, daß** die Einlaßöffnung (40) zahnradähnlich ausgeformt ist, wobei von einem kreisförmigen Innenbereich ausgehend am Umfang mehrere zahnähnliche Ausbuchtungen (53) vorgesehen sind, zwischen denen die Auslaßöffnungen (42) in der Projektion zumindest teilweise angeordnet sind.

15. Lochscheibe nach Anspruch 11, **dadurch gekennzeichnet, daß** die Einlaßöffnung (40) kreuzförmig ausgebildet ist und dabei vier Schenkel (55) aufweist, zwischen denen die Auslaßöffnungen (42) in der Projektion zumindest teilweise angeordnet sind.

16. Lochscheibe nach einem der Ansprüche 1 bis 10, **dadurch gekennzeichnet, daß** in der oberen Funktionsebene (37) wenigstens zwei Einlaßöffnungen (40) vorgesehen sind, von denen jede mit einem Kanal (41) in der mittleren Funktionsebene (36) in Verbindung steht, an den sich in der unteren Funktionsebene (35) jeweils wenigstens eine Auslaßöffnung (42) anschließt.

17. Lochscheibe nach Anspruch 16, **dadurch gekennzeichnet, daß** wenigstens eine der Einlaßöffnungen (40) T-förmig ausgeformt ist.

18. Lochscheibe nach Anspruch 16, **dadurch gekennzeichnet, daß** wenigstens eine der Einlaßöffnungen (40) sichelförmig bzw. kreisringabschnittförmig ausgebildet ist.

19. Lochscheibe nach einem der Ansprüche 16 bis 18, **dadurch gekennzeichnet, daß** in der mittleren Funktionsebene (36) eine der Anzahl der Einlaßöffnungen (40) und der Auslaßöffnungen (42) entsprechende Zahl an Kanälen (41) vorgesehen ist, so daß genau eine Einlaßöffnung (40) über einen Kanal (41) mit einer Auslaßöffnung (42) verbunden ist.

20. Lochscheibe nach einem der vorhergehenden Ansprüche, **dadurch gekennzeichnet, daß** der wenigstens eine Kanal (41) zu den Auslaßöffnungen (42) hin verlaufend Einengungen (58) als Strömungsleitschaufeln besitzt.

21. Lochscheibe nach einem der Ansprüche 16 bis 20, **dadurch gekennzeichnet, daß** die Einlaßöffnungen (40) und die Auslaßöffnungen (42) asymmetrisch über die Fläche der Lochscheibe (23) verteilt sind.

22. Lochscheibe nach einem der vorhergehenden Ansprüche, **dadurch gekennzeichnet, daß** die obere Funktionsebene (37) und die mittlere Funktionsebene (36) zusammen einen Lochscheibenbereich (33) bilden, der einen kleineren Äußendurchmesser hat als ein die untere Funktionsebene (35) umfassender Grundbereich (32).

23. Ventil, insbesondere Brennstoffeinspritzventil für Brennstoffeinspritzanlagen von Brennkraftmaschinen, mit einer Ventillängsachse (2), mit einem Ventilschließkörper (7), der mit einer Ventilsitzfläche (29) zusammenwirkt, mit einer Lochscheibe (23) aus wenigstens einem metallischen Material stromabwärts der Ventilsitzfläche (29), die einen vollständigen Durchgang für ein Fluid aufweist und wenigstens eine Einlaß- (40) und wenigstens eine Auslaßöffnung (42) hat, wobei jede Einlaßöffnung (40) in einer oberen Funktionsebene (37) der Lochscheibe (23) und jede Auslaßöffnung (42) in einer unteren Funktionsebene (35) der Lochscheibe (23) eingebracht ist, und zwischen der oberen Funktionsebene (37) und der unteren Funktionsebene (35) eine mittlere Funktionsebene (36) vorgesehen ist, in der sich wenigstens ein Kanal (41) erstreckt, wobei,
a) die aus mehreren Funktionsebenen (35, 36, 37) aufgebaute Lochscheibe (23) einteilig ausgebildet ist,
b) eine das Produkt der Umfänge aller Einlaßöffnungen (40) mit der Höhe h des Kanals (41) senkrecht zum Querschnitt aller Einlaßöffnungen (40) im Kanal (41) darstellende Eintrittsquerschnittsfläche A_{40c} aufgespannt ist, die größer ist als eine Austrittsquerschnittsfläche A_{42c} im Kanal (41), die sich als Produkt der Umfänge aller Auslaßöffnungen (42) und der Höhe h des Kanals (41) senkrecht zum Querschnitt aller Auslaßöffnungen (42) ergibt, und
c) die Summe der Querschnittsflächen A₄₀ aller Einlaßöffnungen (40) größer ist als die Eintrittsquerschnittsfläche A_{40c} im Kanal (41).

24. Ventil nach Anspruch 23, **dadurch gekennzeichnet, daß** die Ventilsitzfläche (29) in einem Ventilsitzkörper (16) ausgebildet ist, an die sich eine Austrittsöffnung (31) stromabwärts anschließt, und daß die obere Funktionsebene (37) und die mittlere Funktionsebene (36) der Lochscheibe (23) zusammen einen Lochscheibenbereich (33) bilden, der einen kleineren Außendurchmesser hat als ein die untere Funktionsebene (35) umfassender Grundbereich (32) der Lochscheibe (23) und der Lochscheibenbereich (33) in die Austrittsöffnung (31) hineinragt, während der Grundbereich (32) an einer unteren Stirnseite (17) des Ventilsitzkörpers (16) anliegt.

25. Ventil nach Anspruch 24, **dadurch gekennzeichnet, daß** die Lochscheibe (23) mit Hilfe eines Lochscheibenträgers (21) am Ventilsitzkörper (16) befestigbar ist.

## Claims

1. Perforated disc (23), in particular for injection valves, made of at least one metallic material, having a complete passage for a fluid, having at least one inlet opening (40) and at least one outlet opening (42), each inlet opening (40) being made in an upper functional plane (37) of the perforated disc (23) and each outlet opening (42) being made in a lower functional plane (35) of the perforated disc (23), having at least one channel (41), that is provided in a central functional plane (36) located between the upper functional plane (37) and the lower functional plane (35) and makes possible the complete passage for a fluid from the at least one inlet opening (40) to the at least one outlet opening (42),
a) the perforated disc (23), which is built up from a plurality of functional planes (35, 36, 37), being constructed in one piece,
b) an entry cross-sectional area A_{40c} being covered which constitutes the product of the peripheries of all the inlet openings (40) and the height h of the channel (41) perpendicular to the cross-section of all the inlet openings (40) in the channel (41), and being greater than an exit cross-sectional area A_{42c} in the channel (41), which results from the product of the peripheries of all the outlet openings (42) and the height h of the channel (41) perpendicular to the cross-section of all the outlet openings (42) and
c) the sum of the cross-sectional areas A₄₀ of all the inlet openings (40) being greater than the entry cross-sectional area A_{40c} in the channel (41).

2. Perforated disc according to Claim 1, **characterized in that** the at least one inlet opening (40) has an opening contour that differs from the at least one outlet opening (42).

3. Perforated disc according to one of the preceding claims, **characterized in that** the sum of the cross-sectional areas A₄₀ of all the inlet openings (40) is an amount which is greater than or equal to the value of the sum of the cross-sectional areas A₄₂ of all the outlet openings (42).

4. Perforated disc according to one of the preceding claims, **characterized in that** each channel (41) has such an extent that it completely undermines each inlet opening (40) to which it is connected, with the result that, in the projection, the inlet openings (40) are in each case completely covered by the channels (41).

5. Perforated disc according to one of the preceding claims, **characterized in that** each channel (41) has such an extent that it at least partially covers each outlet opening (42) to which it is connected.

6. Perforated disc according to one of the preceding claims, **characterized in that** the number of inlet openings (40) and outlet openings (42) is not equal.

7. Perforated disc according to one of the preceding claims, **characterized in that** the inlet openings (40) and the outlet openings (42) are arranged such that, in the case of a projection into one plane, they do not coincide at any point, with the result that there is a complete offset v between the inlet openings (40) and the outlet openings (42).

8. Perforated disc according to Claim 1, **characterized in that** the functional planes (35, 36, 37) of the perforated disc (23) are built up on one another by means of electrical metal deposition (multilayer electroplating).

9. Perforated disc according to Claim 8, **characterized in that** each functional plane (35, 36, 37) has a characteristic opening structure (40, 41, 42) which differs from that immediately following in each case in the flow direction.

10. Perforated disc according to Claim 9, **characterized in that** the number of functional planes (35, 36, 37) is greater than or equal to the number of electrically deposited layers or the electroplating steps necessary therefor.

11. Perforated disc according to one of the preceding claims, **characterized in that** in the upper functional plane (37) there is provided only one inlet opening (40), which is connected to only one channel (41) in the central functional plane (36), which channel (41) is adjoined in the lower functional plane (35) by a plurality of outlet openings (42).

12. Perforated disc according to Claim 11, **characterized in that** the inlet opening (40) has the shape of a stylized bat or of a double H, that is to say has a central and two outer inlet regions (46), which are separated from one another by constrictions (45) constructed between them in each case, and the outlet openings (42), in the projection, are in each case arranged at least partially in the constrictions (45).

13. Perforated disc according to Claim 11, **characterized in that** the inlet opening (40) is constructed to be shaped like a bone, a rotary armature or a double T, two outer, broader inlet regions (46) being connected to each other by a narrower connecting region (48), and the outlet openings (42), in the projection, being at least partially arranged in the constrictions (45) resulting from the narrower connecting region (48).

14. Perforated disc according to Claim 11, **characterized in that** the inlet opening (40) is shaped like a gearwheel, a plurality of tooth-like bulges (53) preceding from a circular inner region being provided on the periphery, between which bulges (53), in the projection, the outlet openings (42) are at least partially arranged.

15. Perforated disc according to Claim 11, **characterized in that** the inlet opening (40) is constructed to be cross-shaped and has four limbs (55) between which, in the projection, the outlet openings (42) are at least partially arranged.

16. Perforated disc according to one of Claims 1 to 10, **characterized in that** in the upper functional plane (37) there are provided at least two inlet openings (40), each of which is connected to a channel (41) in the central functional plane (36), which channel (41) is adjoined in the lower functional plane (35) by at least one outlet opening (42) in each case.

17. Perforated disc according to Claim 16, **characterized in that** at least one of the inlet openings (40) is shaped like a T.

18. Perforated disc according to Claim 16, **characterized in that** at least one of the inlet openings (40) is constructed to be shaped like a sickle or circular ring section.

19. Perforated disc according to one of Claims 16 to 18, **characterized in that** in the central functional plane (36) there is provided a number of channels (41) that corresponds to the number of inlet openings (40) and outlet openings (42), with the result that exactly one inlet opening (40) is connected via a channel (41) to an outlet opening (42).

20. Perforated disc according to one of the preceding claims, **characterized in that** the at least one channel (41) has narrowings (58), running towards the outlet openings (42), as flow guide vanes.

21. Perforated disc according to one of Claims 16 to 20, **characterized in that** the inlet openings (40) and the outlet openings (42) are distributed asymmetrically over the surface of the perforated disc (23).

22. Perforated disc according to one of the preceding claims, **characterized in that** the upper functional plane (37) and the central functional plane (36) together form a perforated disc region (33) which has a smaller outer diameter than a base region (32) surrounding the lower functional plane (35).

23. Valve, in particular a fuel injection valve for fuel injection systems of internal combustion engines, having a valve longitudinal axis (2), having a valve closing element (7) that interacts with a valve-seat face (29), having a perforated disc (23) made of at least one metallic material downstream of the valve-seat face (29), the said disc having a complete passage for a fluid and at least one inlet opening (40) and at least one outlet opening (42), each inlet opening (40) being made in an upper functional plane (37) of the perforated disc (23) and each outlet opening (42) being made in a lower functional plane (35) of the perforated disc (23), and a central functional plane (36), in which at least one channel (41) extends, being provided between the upper functional plane (37) and the lower functional plane (35),
a) the perforated disc (23), which is built up from a plurality of functional planes (35, 36, 37), being constructed in one piece, and
b) an entry cross-sectional area A_{40c} being covered which constitutes the product of the peripheries of all the inlet openings (40) and the height h of the channel (41) perpendicular to the cross-section of all the inlet openings (40) in the channel (41), and being greater than an exit cross-sectional area A_{42c} in the channel (41), which results from the product of the peripheries of all the outlet openings (42) and the height h of the channel (41) perpendicular to the cross-section of all the outlet openings (42), and
c) the sum of the cross-sectional areas A₄₀ of all the inlet openings (40) being greater than the entry cross-sectional area A_{40c} in the channel (41).

24. Valve according to Claim 23, **characterized in that** the valve-seat face (29) is constructed in a valve-seat element (16) which is adjoined downstream by an exit opening (31), and **in that** the upper functional plane (37) and the central functional plane (36) of the perforated disc (23) together form a perforated disc region (33) which has a smaller outer diameter than a base region (32) of the perforated disc (23) surrounding the lower functional plane (35), and the perforated disc region (33) projects into the exit opening (31), while the base region (32) rests on a lower front side (17) of the valve-seat element (16).

25. Valve according to Claim 24, **characterized in that** the perforated disc (23) can be fastened on the valve-seat element (16) with the aid of a perforated-disc carrier (21).

## Revendications

1. Disque perforé (23), notamment pour des injecteurs, formé d'au moins une matière métallique, ayant un passage complet pour un fluide, avec
au moins un orifice d'entrée (40) et au moins un orifice de sortie (42), chaque orifice d'entrée (40) étant réalisé dans le plan fonctionnel supérieur (37) du disque perforé (23) et chaque orifice de sortie (42) dans le plan fonctionnel inférieur (35) du disque perforé (23),
au moins un canal (41), situé dans un plan fonctionnel médian (36), entre le plan fonctionnel supérieur (37) et le plan fonctionnel inférieur (35), qui permet le passage complet du fluide d'au moins un orifice d'entrée (40) vers au moins un orifice de sortie (42), selon lequel
a) le disque perforé (23), composé de plusieurs plans fonctionnels (35, 36, 37) est réalisé en une seule pièce,
b) le produit du périmètre de tous les orifices d'entrée (40) par la hauteur (h) du canal (41), perpendiculairement à la surface de section d'entrée (A_{40c}), représentant la section de tous les orifices d'entrée (40) dans le canal (41), est supérieur à une surface de section de sortie (A_{42c}) dans le canal (41) correspondant au produit du périmètre de tous les orifices de sortie (42) par la hauteur (h) du canal (41) perpendiculairement à la section de tous les orifices de sortie (42), et
c) la somme des surfaces des sections (A₄₀) de tous les orifices d'entrée (41) est supérieure à la surface de la section d'entrée (A_{40c}) dans le canal (41).

2. Disque perforé selon la revendication 1,
**caractérisé en ce que**
l'orifice d'entrée (40) au moins unique a un contour d'ouverture autre que l'orifice de sortie (42) au moins unique.

3. Disque perforé selon l'une quelconque des revendications précédentes,
**caractérisé en ce que**
la somme des surfaces de section (A₄₀) de tous les orifices d'entrée (40) est une valeur supérieure ou égale à la valeur de la somme des surfaces des sections (A₄₂) de tous les orifices de sortie (42).

4. Disque perforé selon l'une quelconque des revendications précédentes,
**caractérisé en ce que**
chaque canal (41) a une extension telle qu'il passe complètement en dessous de tout orifice d'entrée (40) avec lequel il communique de façon qu'en projection, les orifices d'entrée (40) sont complètement couverts par les canaux (41).

5. Disque perforé selon l'une quelconque des revendications précédentes,
**caractérisé en ce que**
chaque canal (41) a une extension telle qu'il couvre au moins partiellement l'orifice de sortie (42) avec lequel il communique.

6. Disque perforé selon l'une quelconque des revendications précédentes,
**caractérisé en ce que**
le nombre d'orifices d'entrée (40) et le nombre d'orifices de sortie (42) est différent.

7. Disque perforé selon l'une quelconque des revendications précédentes,
**caractérisé en ce que**
les orifices d'entrée (40) et les orifices de sortie (42) sont disposés pour qu'en projection dans un plan ils ne se chevauchent à aucun point et qu'il existe un décalage total (v) entre les orifices d'entrée (40) et les orifices de sortie (42).

8. Disque perforé selon la revendication 1,
**caractérisé en ce que**
les plans fonctionnels (35, 36, 37) du disque perforé (23) sont réalisés par dépôts galvaniques de métal (dépôt galvanique multicouche) les uns sur les autres.

9. Disque perforé selon la revendication 8,
**caractérisé en ce que**
chaque plan fonctionnel (35, 36, 37) a une structure d'ouverture caractéristique (40, 41, 42) qui se distingue de celle qui suit directement dans le sens de passage du fluide.

10. Disque perforé selon la revendication 9,
**caractérisé en ce que**
le nombre de plans fonctionnels (35, 36, 37) est supérieur ou égal au nombre de couches de dépôt galvanique ou d'opérations de dépôt galvanique nécessaires.

11. Disque perforé selon l'une quelconque des revendications précédentes,
**caractérisé en ce que**
le plan fonctionnel supérieur (37) ne comporte qu'un orifice d'entrée (40) communiquant avec un canal (41) dans le plan fonctionnel médian (36) suivi de plusieurs orifices de sortie (42) dans le plan fonctionnel inférieur (35).

12. Disque perforé selon la revendication 11,
**caractérisé en ce que**
l'orifice d'entrée (40) a la forme d'une chauve-souris stylisée ou d'un double H avec une zone d'entrée médiane et deux zones d'entrée extérieures (46) qui sont séparées chaque fois par des rétrécissements (45) intermédiaires et les orifices de sortie (42) sont prévus au moins en partie en projection chaque fois dans les rétrécissements (45).

13. Disque perforé selon la revendication 11,
**caractérisé en ce que**
l'orifice d'entrée (40) a une forme d'osselet, d'induit ou de double T, deux zones d'entrée extérieures plus larges (46) sont reliées par une zone de liaison plus étroite (48), et les orifices de sortie (42) sont prévus au moins en partie en projection dans les rétrécissements (45) correspondant à la zone de liaison plus étroite (48).

14. Disque perforé selon la revendication 11,
**caractérisé en ce que**
l'orifice d'entrée (40) a une forme de roue dentée avec une zone intérieure circulaire partant à la périphérie et ayant plusieurs cavités (53) en forme de dents entre lesquelles se trouvent au moins en partie les orifices de sortie (42) en projection.

15. Disque perforé selon la revendication 11,
**caractérisé en ce que**
l'orifice d'entrée (40) a une forme de croix et comporte quatre branches (55) entre lesquelles se trouvent en projection au moins en partie les orifices de sortie (42).

16. Disque perforé selon l'une quelconque des revendications 1 à 10,
**caractérisé en ce que**
dans le plan fonctionnel supérieur (37) il y a au moins deux orifices d'entrée (40) dont chacun communique avec un canal (41) dans le plan fonctionnel médian (36) auquel fait suite chaque fois au moins un orifice de sortie (42) dans le plan fonctionnel inférieur (35).

17. Disque perforé selon la revendication 16,
**caractérisé en ce qu'**
au moins l'un des orifices d'entrée (40) a une forme de T.

18. Disque perforé selon la revendication 16,
**caractérisé en ce qu'**
au moins l'un des orifices d'entrée (40) a une forme de faucille ou de segment d'anneau de cercle.

19. Disque perforé selon l'une quelconque des revendications 16 à 18,
**caractérisé en ce que**
dans le plan fonctionnel médian (36) on a un certain nombre d'orifices d'entrée (40) et un nombre de canaux (41) correspondant à celui des orifices de sortie (42) pour que précisément un orifice d'entrée (40) soit relié par un canal (41) à un orifice de sortie (42).

20. Disque perforé selon l'une quelconque des revendications précédentes,
**caractérisé par**
au moins un canal (41) ayant des rétrécissements (58) vers les orifices de sortie (42), les rétrécissements constituant des aubes de guidage de flux.

21. Disque perforé selon l'une quelconque des revendications 16 à 20,
**caractérisé en ce que**
les orifices d'entrée (40) et les orifices de sortie (42) sont répartis de manière asymétrique sur la surface du disque perforé (23).

22. Disque perforé selon l'une quelconque des revendications précédentes,
**caractérisé en ce que**
le plan fonctionnel supérieur (37) des plans fonctionnels médians (36) forment ensemble une zone de disques perforés (33) ayant un plus petit diamètre extérieure qu'une zone de base (32) comprenant le plan fonctionnel inférieur (35).

23. Soupape, notamment injecteur de carburant, pour une installation d'injection de carburant d'un moteur à combustion interne ayant un axe longitudinal d'injecteur (2), un organe de fermeture de soupape (7), coopérant avec une surface formant siège de soupape (29), un disque perforé (23) au moins en une matière métallique, en aval de la surface formant siège de soupape (29) qui présente un passage complet pour le fluide et au moins un orifice d'entrée (40) et au moins un orifice de sortie (42), chaque orifice d'entrée (40) étant situé dans un plan fonctionnel supérieur (37) du disque perforé (23) et chaque orifice de sortie (42) dans un plan fonctionnel inférieur (35) du disque perforé (23), avec entre le plan fonctionnel supérieur (37) et le plan fonctionnel inférieur (35), un plan fonctionnel médian (36) dans lequel s'étend au moins un canal (41),
dans laquelle
a) le disque perforé (23) composé de plusieurs plans fonctionnels (35, 36, 37) est réalisé en une seule pièce,
b) une surface de section d'entrée (A_{40c}) représentant le produit du périmètre de tous les orifices d'entrée (40) par la hauteur (h) du canal (41) perpendiculairement à la section de tous les orifices d'entrée (40) dans le canal (41), est supérieure à la surface de la section de sortie (A_{42c}) du canal (41) correspondant au produit du périmètre de tous les orifices de sortie (42) et de la hauteur (h) du canal (41) perpendiculairement à la section de tous les orifices de sortie (42), et
c) la sommes de toutes les surfaces de section (A₄₀) de tous les orifices d'entrée (40) est supérieure à la surface de la section d'entrée (A_{40c}) dans le canal (41).

24. Soupape selon la revendication 23,
**caractérisée en ce que**
la surface formant siège de soupape (29) est réalisée dans un corps de siège de soupape (16) suivi en aval par un orifice de sortie (31) et le plan fonctionnel supérieur (37), et le plan fonctionnel médian (36) du disque perforé (23) forment ensemble une zone de disque perforé (33) ayant un plus petit diamètre extérieur que la zone de base (32) comprenant le plan fonctionnel inférieur (35) du disque perforé (23), et la zone de disque perforé (33) pénètre dans l'orifice de sortie (31) alors que la zone de base (32) s'applique contre la face inférieure (17) du corps formant siège de soupape (16).

25. Soupape selon la revendication 24,
**caractérisée en ce que**
le disque perforé (23) est fixé au corps formant siège de soupape (16) à l'aide d'un support de disque perforé (21).
